# EUROPÄISCHE PATENTANMELDUNG

(11) **EP 1 518 512 A2**
(43) Veröffentlichungstag der Anmeldung: **30.03.2005**
(21) Anmeldenummer: 04030572.4
(22) Anmeldetag: 19.02.2002
(51) Int. Cl.: A61C 17/22

(54) **Vorrichtung zur Zahnreinigung**

(30) Priorität: 04.12.2001 DE 10159395
(62) Teilanmeldung aus: 02719867.0
(71) Anmelder: Braun GmbH, 61476 Kronberg (DE)
(72) Erfinder: Hilscher, Alexander, 61476 Kronberg (DE); Reick, Hansjörg, 61449 Steinbach (DE); Stratmann, Martin, 60318 Frankfurt (DE); Trawinski, Peter, 64331 Weiterstadt (DE); Vorbeck, Wolfgang, 65510 Idstein-Eschenhahn (DE); Schwarz-Hartmann, Armin, 55234 Wendelsheim (DE)
(74) Vertreter: Vorbeck, Wolfgang, Dr.

(57) **Zusammenfassung**

Es wird ein Bürstenkopfteil einer Zahnbürste vorgeschlagen, wobei die Zahnbürste ein Handteil (10) aufweist, an das das Bürstenkopfteil angefügt werden kann, mit einer ein Borstenteil umfassenden Bürstenkopfanordnung, die vom Handteil (10) der Zahnbürste abnehmbar ist. Dabei sind Kommunikationsmittel zur Datenkommunikation zwischen der Bürstenkopfanordnung und dem Handteil (10) vorgesehen, und mit einem Speicherelement in der Bürstenkopfanordnung zum Speichern von Daten, wobei die Daten in das Speicherelement eingeschrieben werden.

## Beschreibung

Die Erfindung betrifft ein Bürstenkopfteil einer Zahnbürste, wobei die Zahnbürste ein Handteil aufweist, an das das Bürstenkopfteil angefügt werden kann, mit einer ein Borstenteil umfassenden Bürstenkopfanordnung, die vom Handteil der Zahnbürste abnehmbar ist sowie eine Zahnbürste mit einem Bürstenkopfteil, das in Nähe seines einen Endes ein Borstenteil aufweist, ferner mit einem Handteil mit einer darin angeordneten Antriebseinheit zum Antrieb des Borstenteils, wobei das Bürstenkopfteil und das Handteil so angepaßt sind, daß das Bürstenkopfteil vom Handteil abnehmbar ist.

Zahnputz- bzw. -reinigungsvorrichtungen wie elektrische Zahnbürsten oder elektrische Mundduschen besitzen in der Regel einen Griff bzw. ein Handteil oder Handstück, auf das verschiedene Putzwerkzeuge wie Aufsteckbürsten, Spritzdüsen, Interdentalbürsten oder sonstige Bürstenteile aufsteckbar sind, so daß mehrere Benutzer mit jeweils eigenen, insbesondere personenbezogenen Putzwerkzeugen die Zahnputzvorrichtung nutzen können. Solche elektrischen Zahnbürsten sind zum Beispiel aus der DE 19627752 A1 oder der EP 0624079 B1 bekannt.

Aus der DE 299 15 858 U1 ist eine Zahnputzvorrichtung bekannt, bei der jede der verschiedenen Zahnbürsten nur jeweils an einer bestimmten Einstecköffnung einer Konsole angeschlossen werden kann. Dadurch läuft dann das für diese spezielle Zahnbürste vorgesehene Programm ab. Allerdings ist es insbesondere für Kinder mühsam, die für die personenbezogene Zahnbürste vorgesehene individuelle Einstecköffnung zu finden und den Stecker dort zu adaptieren. Außerdem ist diese Konsole herstellungstechnisch sehr aufwendig, da zum einen eine Vielzahl unterschiedlicher Einstecköffnungen vorzusehen sind, wobei auch jede der Zahnbürsten einen unterschiedlichen, der jeweiligen Einstecköffnung zugeordneten Stecker aufzuweisen hat.

Bei einer weiteren Vorrichtung nach US 5184959 ist jeder Handzahnbürste in einer Konsole ein eigener Einsteckschlitz zugeordnet, so daß jeder Zahnbürste durch die Konsole ein individuelles Putzzeitsignal zugeordnet werden kann. Diese Anordnung ist herstellungstechnisch sehr aufwendig, wobei benutzerspezifische Daten des Zahnputzvorganges nicht erfaßt und gespeichert werden können.

Solche Zahnputzvorrichtungen sind in mehrerer Hinsicht verbesserungsfähig. Insbesondere besteht ein Problem darin, daß sich bei akkubetriebenen Zahnbürsten der Akku vorzeitig leeren kann. Dies kann z. B. dann passieren, wenn die Zahnbürste nicht ordnungsgemäß verpackt in eine Reisetasche oder dergleichen verstaut wird und sich der Antrieb ungewollt einschaltet. Ferner kann es bisweilen vorkommen, daß auf das Handteil nicht richtig passende Aufsteckbürsten aufgesteckt werden, so daß es in Folge der fehlenden Kompatibilität zu Beschädigungen des Handteils, z. B. der Kupplungsabschnitte, insbesondere im Bereich des Antriebsstrangs kommen kann, oder aber aufgrund der fehlenden Kompatibilität eine ordnungsgemäße Reinigungsfunktion nicht gewährleistet ist.

Des weiteren sind auch Vorrichtungen zur Zahnreinigung, nämlich elektrisch betriebene Zahnbürsten mit Handteil und aufsteckbarem Bürstenteil der Firma Bausch & Lomb, Modell Interplak (registrierte Marke), z. B. PB-6, ca. 1992, in den USA in den Handel gelangt, bei denen das Handteil in einem Gehäuseausschnitt einen mechanisch zu betätigenden Schalter besitzt, der gegebenenfalls von einer wasserdichten Schutzfolie abgedeckt ist, wobei ein Schaltkontakt dieses Schalters mittels eines Gehäuseansatzes des Kunststoffgehäuses des Bürstenteils dann betätigt wird, wenn das Bürstenteil auf das Handteil aufgesteckt ist. Ist bei aufgestecktem Bürstenteil der Schaltkontakt betätigt, läßt sich der Antrieb der Zahnbürste mittels eines Einschalters am Handstück einschalten. Vermutlich sind diese Maßnahmen aus Sicherheitsgründen vorgesehen, da im Gegensatz zu vielen anderen Handteilen bei elektrischen Zahnbürsten die Antriebswelle bei der vorerwähnten Zahnbürste in Richtung der Längsachse vor- und zurückschwingt. Der Hub der Welle ist beträchtlich, so daß ein Einschalten des Handteils ohne aufgestecktes Bürstenteil zu einer Verletzungsgefahr führen könnte, da die Antriebswelle eine Hubbewegung ähnlich einer Nähnadel einer Nähmaschine durchführt. Gegen diesen Stand der Technik sind die das Handteil bzw. Bürstenteil betreffenden unabhängigen Ansprüche abgegrenzt.

Aus der DE 28 26 008 C2 ist ein Schalter zur Betätigung einer elektrischen Zahnbürste mit einem an einem ringförmigen Betätigungsteil angeordneten Permanentmagneten bekannt, wobei das ringförmige Betätigungsteil axial verschiebbar auf dem Gehäuse angeordnet ist. Der Permanentmagnet des ringförmigen Betätigungsteils aktiviert bzw. deaktiviert einen im Inneren des Gehäuses der Zahnbürste angeordneten magnetempfindlichen Schalter, beispielsweise ein Reed-Relais. Das ringförmige Betätigungsteil kann von dem Gehäuse der Zahnbürste abgezogen werden, so daß nach dem Entfernen eine leichte Reinigung des Gehäuses sowie des Betätigungsteils möglich ist. Im übrigen dient das Entfernen des Betätigungsteils zugleich auch als Einschaltschutz für die elektrische Zahnbürste, so daß vermieden ist, daß sich die Zahnbürste mit abgezogenem Betätigungsteil beim Transport in einer Tasche oder in einem Koffer selbsttätig einschalten kann und ein unbeabsichtigtes Entleeren der Akkumulatoren bzw. Batterien vermieden ist.

Diese vorerwähnten Maßnahmen zur Bereitstellung einer sogenannten Reisesicherungs-Funktion haben sich in der Praxis jedoch nicht bewährt, da beispielsweise bei der Interplak-Lösung erhebliche Aufsteck- bzw. Abzugskräfte zum Aufstecken bzw. Abziehen des Bürstenteils vom Handteil erforderlich sind, um den im Handteil vorgesehenen Schaltkontakt zu betätigen. Auch besteht das Problem der Verschmutzung der Schaltkontakte bzw. des hohen Fertigungsaufwandes zur schmutz- oder wasserdichten Abdeckung des Schaltkontaktes. Der abziehbare Schaltring der Patentschrift DE 28 26 008 C2 dient ebenfalls zur Bereitstellung einer Reisesicherungsfunktion, doch stellt sich hierbei das Problem, daß der abgezogene Schaltring gerade auf Reisen verlorengehen kann und dann das Handstück trotz voller Akkumulatoren oder Batterien dennoch nicht in Gang setzbar ist. Im übrigen bieten diese bekannten Lösungen zur Bereitstellung einer Reisesicherungsfunktion wenig Flexibilität im Hinblick auf weitere Komfortfunktionen, z. B. eine selbsttätige Anpassung der Betriebsparameter eines Handteils an ein spezifisches Bürstenteil oder die benutzerspezifische Sammlung und Speicherung von Putzdaten oder dergleichen.

Des weiteren ist aus der EP 0 848 921 A1 eine Bürste für den Heimwerkergebrauch sowie ein Herstellungsverfahren hierfür bekannt geworden, bei dem ein sogenanntes Tag als Datenspeicher unlösbar in der Bürste selbst, nämlich zwischen einem Borstenträger und einem topfförmigen Halteelement befestigt ist. In dem Tag sollen dann Daten bezüglich Sicherheitsnormen, der maximalen Drehzahl, dem Land der Herstellung, die Marke des Herstellers, Artikelnummer, Verbindungsdurchmesser und beispielsweise ein Barcode gespeichert werden, der mittels eines elektronischen Lesesystems beispielsweise an der Kasse des Heimwerkermarktes auslesbar ist. Der Tag kann insbesondere auch Aluminium oder einem wärmewiderstandsfähigen Kunststoffmaterial bestehen, da die Bürsten während des Gebrauches äußerst hohen Temperaturen ausgesetzt sind. Offensichtlich handelt es sich bei diesem Tag um eine Aluminium- oder Kunststoffscheibe, deren Oberfläche mit optisch lesbaren Informationen versehen und unlösbar mit dem Bürstenkörper verbunden ist. Derartige Codes haben jedoch den Nachteil einer recht geringen Speicherfähigkeit und sind nicht umprogrammierbar. Auch die Lesbarkeit setzt das Vorhandensein einer freien optischen Zugänglichkeit des Codes voraus, was nicht in allen Anwendungsfällen gegeben ist.

Weiterhin sind eine Vielzahl von elektronischen Warensicherungssystemen bekannt, bei denen Sicherungsetiketten, die beispielsweise elektrische Schwingkreise oder weichmagnetische Sensorstreifen umfassen, an der Ware angebracht werden und in Schleusen am Ladenausgang von elektromagnetischen Feldern angeregt werden. Bei unbezahlter Ware, d. h. aktiven Sicherungsetiketten, wird ein Signal detektiert und ein Alarm ausgelöst. Einzelheiten hierzu finden sich beispielsweise in dem Artikel "Der große Lauschangriff auf Ladendiebe" Gieselher Herzer, Physikalische Blätter 57 (2001), Nr. 5, Seite 43 bis 48.

Ein Unterfall dieser Systeme sind die sogenannten RFID-Systeme (radio-frequencyidentification), die bei kontaktlosen Chipkarten, neuerdings bei Autoschlüsseln oder auch bei Mülltonnen, eingesetzt werden, um im letztgenannten Fall eine von der tatsächlichen Leerung der Mülltonnen abhängige Kostenabrechnung zu ermöglichen.

Derartige Systeme sind beispielsweise aus der US 5,812,065, WO 00/42584, US 6,177,870, WO 00/39768, DE 199 53 651 A1 oder auch WO 98/24527 bekannt, wobei mittels des Systems der letztgenannten Schrift in einem elektronischen Spielzeug zwischen der Figur, die einen Transponder aufweist, und einem Basisgerät, welches ein Lesegerät aufweist, Daten ausgetauscht werden können.

Der vorliegenden Erfindung liegt die Aufgabe zugrunde, ein verbessertes Bürstenkopfteil sowie eine Zahnbürste zu schaffen, die die Nachteile des Standes der Technik vermeiden, diesen weiterbilden und weitere Vorteile erzielen. Insbesondere sollen Funktionen bereitgestellt werden, die spezifisch für das individuelle Bürstenteil bzw. den individuellen Benutzer sind.

Diese Aufgabe wird bei dem Bürstenkopfteil mit dem eingangs genannten Merkmal im wesentlichen dadurch gelöst, daß Kommunikationsmittel zur Datenkommunikation zwischen der Bürstenkopfanordnung und dem Handteil vorgesehen sind, wobei die Bürstenkopfanordnung ein Speicherelement zum Speichern von Daten aufweist und die Daten in das Speicherelement eingeschrieben werden.

Von Vorteil umfassen die Kommunikationsmittel Mittel zur Datenkommunikation mit dem Handteil, wenn das Bürstenkopfteil und der Handgriff zusammengefügt werden.

Dabei ist es von Vorteil vorgesehen, daß die Informationen Betriebsinformationen zur sachgemäßen Verwendung der Zahnbürste bezüglich der Bürstenkopfanordnung betreffen.

Es bietet sich des weiteren an, daß die Kommunikationsmittel elektrisch leitende Elemente umfassen.

Bevorzugt sind die Kommunikationsmittel als drahtlose Komponenten ausgebildet.

Dabei umfassen die drahtlosen Komponenten Spulen zur induktiven Kommunikation.

Bei der Zahnbürste mit den eingangs genannten Merkmalen wird die Aufgabe im wesentlichen dadurch gelöst, daß Kommunikationsmittel zur Datenkommunikation zwischen dem Bürstenkopfteil und dem Handteil vorgesehen sind, wenn das Bürstenkopfteil und das Handteil zusammengefügt werden. Weiterhin ist ein Speicherelement im Bürstenkopfteil zum Speichern zumindest von Daten, die das Bürstenkopfteil identifizieren, vorgesehen, wobei im Handteil ein Mikrocontroller angeordnet ist und das Speicherelement im Bürstenkopfteil darin enthaltene Informationen an den Mikrocontroller über Kommunikationsmittel weitergibt.

Nach einer bevorzugten Ausgestaltung der erfindungsgemäßen Zahnbürste umfaßt der Mikrocontroller Mittel, um die tatsächliche Benutzung des Bürstenkopfes mit einer bestimmten Maximalputzdauer zu vergleichen und um einen Hinweis zu geben, wenn die bestimmte Maximalputzzeitdauer erreicht worden ist, um anzuzeigen, daß der Bürstenkopf ausgetauscht werden sollte.

Bei einem Handteil einer elektrischen Zahnreinigungsvorrichtung mit einer Kupplung zum mechanischen Ankupplung eines Bürstenteils, mit einem Antrieb für das Bürstenteil sowie einer Steuerfunktion für den Antrieb, wobei die Steuerfunktion eine Betriebssperrfunktion umfaßt, die von einer Freischaltfunktion insbesondere des Bürstenteils aktivierbar bzw. deaktivierbar ist, kann es auch vorgesehen sein, daß das Handteil eine Lese-Funktion und eine Spule als Kopplungsfunktion zur kontaktlosen Übertragung und zum Lesen von einer oder mehreren Informationen bzw. Daten einer Freischaltfunktion aufweist, wobei in Abhängigkeit eines Ausgangssignals der Lese-Funktion die Betriebssperrfunktion aktiviert oder deaktiviert wird. Der Vorteil dieser Maßnahmen gegenüber dem Stand der Technik besteht darin, daß eine komfortable Handhabung beim Kuppeln bzw. Entkuppeln von Handteil und Bürstenteil erreicht ist, eine mechanische Betätigung von im Handteil vorgesehenen Komponenten zur Aktivierung/Deaktivierung der Betriebssperrfunktion durch das Bürstenteil nicht erforderlich ist und die Voraussetzung für die Implementierung weiterer benutzerfreundlicher Funktionen gegeben ist. Auch ist es nicht erforderlich, Schalterbetätigungen oder sonstige Bauteile vom Handteil zu entfernen, um eine Reisesicherungsfunktion zu realisieren. Es sei im folgenden angemerkt, daß die Begriffe Handteil einer elektrischen Zahnreinigungsvorrichtung, Bürstenteil oder dergleichen sich nicht nur eine elektrisch betriebene Zahnbürste, sondern auch auf sonstige elektrisch betriebene Zahnreinigungsvorrichtungen, wie z. B. Mundduschen, Interdentalreiniger oder dergleichen, beziehen können, bei denen ein Handstück mit einem Reinigungsstück koppelbar ist, wobei das Reinigungsstück entweder benutzerspezifisch verwendet wird bzw. ein Verbrauchsteil darstellt. Insoweit können auch die Begriffe Bürstenteil, Aufsteckbürste, Aufsatzbürste, Ersatzbürste mit dem Begriff Reinigungsteil, Spritzdüse, Interdentalreiniger gleichgestellt bzw. gegeneinander ausgetauscht werden.

Von Vorteil ist die Lese-Funktion und/oder Kopplungsfunktion über eine Einschaltfunktion des Handteils, insbesondere eine Einschaltfunktion für den Antrieb, aktivierbar.

Weiterhin bietet es sich an, daß die Lese-Funktion bzw. die Kopplungsfunktion Daten überträgt und liest, sofern das Bürstenteil dem Handteil mechanisch angekuppelt ist.

Dabei ist es von Vorteil vorgesehen, daß die Kopplungsfunktion induktiv arbeitet.

Die Spule ist bevorzugt in einem der Kupplung angrenzenden Abschnitt des Handteils bzw. auch im Bereich der Kupplung selbst angeordnet.

Es bietet sich des weiteren an, daß die Spule eine oder mehrere Windungen aufweist, die eine Längsachse des Handstücks, bevorzugt eine Drehachse einer vom Antrieb angetriebenen Antriebswelle des Handstücks umfassen oder umschließen.

Weiterhin ist es vorgesehen, daß die Windungsfläche der Spule mit einer Dreh- oder Längsachse des Handstücks einen Winkel zwischen ca. 140° und ca. 40°, bevorzugt 90° ± 10° einschließt.

In einem Ausnahmefall kann es sich auch anbieten, daß die Freischaltfunktion dem Handteil selbst zugeordnet, insbesondere in oder an einem Gehäuse des Handteils befestigt ist.

Weiterhin besteht die Möglichkeit, daß mittels des Antriebes eine Antriebswelle in wenigstens eine alternierend rotierende Drehbewegung um eine Drehachse bzw. eine rotierende Drehbewegung um eine Drehachse und/oder in eine Schwenkbewegung um eine zur Drehachse im wesentlichen senkrecht angeordnete Schwenkachse versetzbar ist.

Von Vorteil sind die Lesefunktion, die Steuerfunktion und die Betriebssperrfunktion Bestandteils eines ASICS. In manchen Anwendungsfällen kann es sich jedoch auch anbieten, diese Funktionen diskret aufzubauen bzw., soweit möglich, mittels einer geeigneten Software in einem Mikrokontroller o.ä. zu realisieren.

Das Bürstenteil mit einem antreibbaren Bürstenkopf sowie einer Gegenkupplung zur mechanischen Ankupplung an ein, eine Kupplung, einen Antrieb und eine Betriebssperrfunktion aufweisenden Handteil einer elektrischen Zahnbürste, mit einer dem Bürstenteil zugeordneten Freischaltfunktion zur Aktivierung oder Deaktivierung der Betriebssperrfunktion zeichnet sich zur Lösung der vorgenannten Aufgabe dadurch aus, daß die Freischaltfunktion (38) des Bürstenteils (20) einen kontaktlosen Datenträger und eine Spule (48) als Kopplungsfunktion zur kontaktlosen Übertragung von ein oder mehreren Daten umfaßt.

Der Datenträger bzw. die Kopplungsfunktion des Bürstenteils ist bevorzugt über eine Einschaltfunktion des Handteils oder diesem zugeordnete Einschaltfunktion, bevorzugt zum Einschalten des Antriebes, aktivierbar.

Der Datenträger bzw. die Kopplungsfunktion überträgt Daten, sofern das Bürstenteil dem Handteil mechanisch angekuppelt ist.

Die Kopplungsfunktion arbeitet von Vorteil induktiv.

Die Spule ist bevorzugt in einem Abschnitt der Gegenkupplung oder in einem hierzu angrenzenden Abschnitt des Bürstenteils angeordnet.

Die Spule besitzt ein oder mehrere Windungen, die eine Längsachse des Bürstenteils oder eine Drehachse einer Aufsteckwelle im Bürstenteil umfassen oder umschließen.

Die Windungsfläche der Spule schließt mit einer Dreh- oder Längsachse des Bürstenteils einen Winkel zwischen ca. 140° und ca. 40°, bevorzugt 90° ± 10 °, ein.

Dabei ist von Vorteil am Bürstenteil eine Profilhülse vorgesehen, die in einem rohrförmigen Schaft des Bürstenteils aufgenommen ist, wobei die Auslese/Übertragungsfunktion bzw. die diese Funktion realisierenden Teile oder Komponenten an der Profilhülse angeordnet bzw. mit dieser verbunden sind. Des weiteren kann der Schaft des Bürstenteils auch eine Aufsteckwelle aufnehmen.

Der kontaktlose Datenträger ist als Transponder, bevorzugt passiver Transponder ohne eigene Energieversorgung, ausgebildet.

Von Vorteil ist vorgesehen, daß der Transponder einen Datenspeicher für digitale Daten, bevorzugt mit einer Speichergröße zwischen 10⁰ bit und ca. 10⁴ bit, besitzt.

Dabei können die zwischen Bürstenteil und Handteil übertragenen Daten neben den Daten zur Betätigung der Freischaltfunktion auch weitere Daten umfassen, welche spezifisch für das individuelle Bürstenteil, für Betriebsparameter zum Betrieb des Bürstenteils bzw. Handteils oder auch spezifisch für den individuellen Benutzer sind.

Von Vorteil werden die digitalen Daten einer Codierungs-Erfassungs-Funktion unterworfen.

Weiterhin ist es vorgesehen, daß ein oder mehrere Daten von Bürstenteil zum Handteil und/oder umgekehrt übertragen werden.

Nach einer anderen Ausgestaltung ist es zweckmäßig, daß Energie vom Handteil zum Bürstenteil zur Aktivierung des passiven Transponders übertragen wird.

Bevorzugt ist vorgesehen, daß Handteil und Bürstenteil zum Datenaustausch bzw. zur Datenübertragung und/oder zur Energieübertragung mittels der Spulen induktiv gekoppelt sind.

Die Vorteile des Systems sowie vorteilhafte Ausgestaltungen sind nachfolgend zusammengefaßt:
Von Vorteil ist bei einem Handteil einer elektrischen Zahnputzvorrichtung eine Steuereinrichtung mit einer Betriebssperrvorrichtung vorgesehen, die über kontaktlosen Datenaustausch bzw. Datenübertragung von einer Freischaltfunktion an dem Putzwerkzeug freischaltbar ist. Hinsichtlich des Putzwerkzeugs der eingangs genannten Art ist vorgesehen, daß es eine Freischaltfunktion zur Freischaltung der Betriebssperrvorrichtung des Handteils über kontaktlosen Datenaustausch bzw. Datenübertragung zwischen Bürstenteil und Handteil besitzt. Durch diese Maßnahmen ist also ein Schutz gegen ungewolltes Einschalten der Zahnputzvorrichtung bereitgestellt. Der Antrieb des Handteils ist nur dann einschaltbar, wenn ein kompatibles, eine Freischaltfunktion aufweisendes Putzwerkzeug dem Handteil aufgesteckt ist und infolge dessen die Betriebssperrvorrichtung freigeschaltet wird. Ein unbeabsichtigtes Einschalten im Reisekoffer oder dergleichen kann einfach durch Entfernen des Putzwerkzeugs vom Handteil verhindert werden. Ein unbeabsichtigtes vorzeitiges Entladen eines Antriebs-Akkus ist somit nicht möglich. Zusätzliche konstruktive oder mechanische Maßnahmen zur Realisierung der Einschaltsperre beispielsweise am Schalter des Handteils sind nicht notwendig. Von Vorteil kann vorgesehen sein, daß die Betriebssperrvorrichtung ausschließlich durch das Freischaltorgan des Putzwerkzeugs freischaltbar ist, insbesondere nur dann, wenn das Putzwerkzeug ordnungsgemäß an das Handteil gekuppelt ist. Dies kann dadurch erreicht werden, daß das Freischaltorgan an dem Putzwerkzeug und eine handteilseitige Erfassungseinrichtung für das Freischaltorgan derart ausgebildet und aufeinander abgestimmt sind, daß das Freischaltorgan bevorzugt in einer vorbestimmten Ausrichtung und/oder Position relativ zu der Erfassungseinrichtung und damit zum Handteil wirksam ist. Um zu verhindern, daß das Handteil, insbesondere der Antriebsstrang bzw. dessen Kupplung durch Aufstecken nicht passender Aufsatzbürsten beschädigt wird, kann das Freischaltorgan eine zusätzliche Codierung aufweisen bzw. codierte Daten übertragen, über die das Putzwerkzeug identifizierbar ist. Das Handteil weist insoweit eine Codierungs-Erfassungseinrichtung bzw. Decodierungsfunktion auf, die die Codierung des jeweils aufgesetzten Putzwerkzeugs erfaßt bzw. decodiert. Die Betriebssperrvorrichtung wird nur dann freigeschaltet, wenn die richtige Codierung vorliegt und ein entsprechendes Signal erzeugt wird. Das Handteil erfaßt also das gerade aufgesetzte, individuelle Putzwerkzeug und steuert in Abhängigkeit des erfaßten Putzwerkzeugs die Freischaltung des Antriebs. Die Codierung kann grundsätzlich in vorgegebenen Intervallen abgefragt werden. In einer besonderen Ausgestaltung der Erfindung jedoch wird die Codierungs-Erfassungseinrichtung nur dann aktiviert, wenn ein Einschalter des Handteils, beispielsweise des elektrischen Antriebes, betätigt wird. Diese Maßnahme hat den Vorteil, daß der Stromverbrauch der erforderlichen elektronischen Komponenten minimiert ist. Zum Einschalten der Zahnputzvorrichtung wird vom Benutzer der Schalter zum Ein- oder Ausschalten der Steuereinrichtung bzw. des Elektromotors wie gewohnt betätigt. Allerdings wird durch Betätigen des Schalters nicht unmittelbar der Elektromotor bzw. Antrieb in Gang gesetzt, sondern zunächst die Codierungsund/oder Erfassungseinrichtung aktiviert, die dann, sofern eine kompatible bzw. passend codierte Aufsteckbürste mit dem Handteil gekuppelt ist, den Motor des Handteils in Betrieb setzt. Letztendlich wird also durch eine Aktivierung der Codierungs-und/oder Erfassungseinrichtung mittels des Ein-/Ausschalters der Antrieb des Handteils lediglich mittelbar in Betrieb gesetzt, nämlich dann, wenn durch das Freischaltorgan des Bürstenteils die Betriebssperrvorrichtung des Handteils deaktiviert. Ist kein Bürstenteil dem Handstück aufgesteckt bzw. mit diesem gekuppelt oder befindet sich ein nicht kompatibles Bürstenteil an dem Handstück, so wird die Codierungs- und/oder Erfassungseinrichtung nach Betätigen des Ein/Ausschalters des Handteils nicht eine passende Codierung erfassen bzw. wird das nicht an der Aufsteckbürste vorhandene Freischaltorgan die Betriebssperrvorrichtung des Handteils nicht deaktivieren können, so daß in diesem Fall das Handstück der elektromotorisch angetriebenen Zahnbürste nicht in Betrieb gesetzt werden kann. Unter anderem hat diese Maßnahme der Aktivierung der Codierungs- und/oder Erfassungseinrichtung mittels des Ein/Ausschalters den Vorteil, daß die Codierungs- und/oder Erfassungseinrichtung bevorzugt nur beim Ein-/Ausschaltvorgang des Schalters des Handteils mit Strom versorgt werden muß und ansonsten jedoch inaktiv oder passiv ist. Natürlich kann auch während des Betriebes der Zahnbürste in regelmäßigen oder unregelmäßigen Intervallen die Codierungsund/oder Erfassungseinrichtung aktiviert werden, um auch außerhalb des Ein/Ausschaltvorganges das Vorhandensein einer kompatiblen, d. h. richtig codierten Aufsteckbürste zu überprüfen. Dies bietet sich bevorzugt zur Behebung einer Fehldetektion einer Aufsteckbürste an. Wenn das Handstück aus welchen Gründen auch immer ohne aufgesetzte Aufsteckbürste durch die Einrichtung (bei gegebenenfalls betätigtem Schalter) eingeschaltet wurde, z. B. aufgrund von vorübergehender Fehlfunktion der Elektronik oder starken Störfeldern, kann das Handstück bei der nächsten Aktivierung der Einrichtung wieder in den ausgeschalteten Zustand versetzt werden. Wird am Ende des Zahnputzvorganges der Ein/Ausschalter erneut betätigt, um den Antrieb des Handteils auszuschalten, wird durch diese Betätigung der Antrieb unmittelbar gestoppt und gegebenenfalls die Betriebssperrvorrichtung deaktiviert, so daß sich bei einem anschließenden Wiedereinschalten des Ein/Ausschalters des Handteils der beschriebene Vorgang wiederholen kann. Weiterhin ist die Codierungs- und/oder Erfassungseinrichtung kontaktlos bzw. berührungslos arbeitend ausgebildet. Hierdurch wird der Vorteil erreicht, daß Störungen durch Verschmutzung von Kontaktflächen oder Verschleiß durch häufiges Aufstecken und Abnehmen sowie auch aufwendige Abdichtungsmaßnahmen vermieden werden. Ebenso kann das Handteil einen Signalempfänger zum Empfang eines codierten oder eines die Betriebssperre freischaltenden Signals von dem Putzwerkzeug aufweisen. Das Handteil kann auch einen Signalsender besitzen, mit dem ein Abfrage- bzw. Aktivierungssignal an die Freischaltfunktion des Putzwerkzeuges gesandt wird, das daraufhin energetisch aktiviert wird und das codierte Signal bzw. das Freischaltsignal zurücksendet. Die Abgabe des codierten Signals bzw. Freischaltsignals von der Freischaltfunktion des Putzwerkzeuges kann durch einen entsprechenden aktiven oder passiven Signalsender oder einen passenden Geber erfolgen.

Die Codierung bzw. Ausbildung des Freischaltorgans des oder der Putzwerkzeuge kann dadurch erfolgen, daß diese in das Putzwerkzeug selbst oder in einen Abschnitt oder Teil des Putzwerkzeugs, beispielsweise einen Farbring oder Profilring, wie er beispielsweise in der WO 99/20202 beschrieben ist, die durch ausdrücklichen Verweis in den Offenbarungsgehalt der vorliegenden Anmeldung aufgenommen wird, oder eine entsprechende Vorrichtung eingebracht ist.

Eine weitere Maßnahme besteht darin, daß eine elektrisch arbeitende ErfassungsEinrichtung zur Erfassung einer elektrischen Codierung bzw. des Freischaltorgans des jeweils angekuppelten Putzwerkzeugs vorgesehen ist. Das Putzwerkzeug sendet ein nicht codiertes oder codiertes elektrisches Signal an das Handteil bzw. an einen daran vorgesehenen Signalempfänger, so daß das jeweilige Putzwerkzeug erkannt werden kann. Es kann auch zunächst ein Abfragesignal von dem Handteil an das Putzwerkzeug gesandt werden, das von dem Putzwerkzeug codiert oder modifiziert und anschließend zurückgesandt wird. Es kann auch eine Sende- oder Funkeinrichtung zur Erkennung des jeweils aufgesteckten Putzwerkzeugs mittels elektromagnetischer Wellen vorgesehen sein. Insbesondere kann dem Putzwerkzeug ein Transponder zugeordnet sein. Das Handteil sendet zunächst elektromagnetische Wellen aus, um den im allgemeinen passiven Transponder mit Energie zu versorgen. Dieser speichert die Energie und sendet eine individuelle Kennung an einen Detektor in dem Handteil zurück, der diese erkennt und dementsprechend das Putzwerkzeug identifiziert bzw. die Freischaltung der Betriebssperre aktiviert.

Das Putzwerkzeug zeichnet sich also dadurch aus, daß eine magnetische, elektrische und/oder elektromagnetisch arbeitende Codiereinrichtung bzw. ein derartiges Freischaltorgan vorgesehen ist. Ferner kann es sich dadurch auszeichnen, daß ein Signalempfänger zum Empfang eines Signals von der Zahnputzvorrichtung und ein Signalsender zum Senden eines codierten Signals an die Zahnputzvorrichtung vorgesehen sind, wobei zwischen den Signalempfänger und den Signalsender bevorzugt eine Codiereinrichtung zur Codierung des empfangenen Signals geschaltet ist. Vorzugsweise ist die Codiereinrichtung bzw. das Freischaltorgan als separates Bauteil ausgebildet und kann von dem restlichen Teil des Putzwerkzeugs abgenommen bzw. ausgetauscht werden. Hierdurch wird der Vorteil erreicht, daß das Putzwerkzeug an sich nur in einer Ausführungsform gefertigt werden muß. Durch Anbringen der separaten Codiereinrichtung bzw. Freischaltfunktion werden die Putzwerkzeuge individuell codiert und können einem Handteil bestimmten Typs zugeordnet werden. Jedoch kann die als Freischaltorgan ausgebildete Codiereinrichtung auch in dem Putzwerkzeug integriert sein, wenn lediglich die Funktion eines Einschaltschutzes als Reisesicherung bzw. für nicht kompatible Putzwerkzeuge realisiert werden soll. Vorzugsweise ist die Codiereinrichtung bzw. das Freischaltorgan im Bereich der Verbindung bzw. Kupplung des Putzwerkzeugs zu dem Handteil angeordnet. Hierdurch wird das Lesen der Codierung bzw. Erfassen des Freischaltorgans durch die Erkennungs-Einrichtung an dem Handteil erleichtert. Insbesondere kann das Freischaltorgan oder die Codiereinrichtung in einen Ring integriert sein, der an der handteilseitigen Stirnseite des Putzwerkzeugs angeordnet, insbesondere formschlüssig aufgeschnappt ist. Die verschiedenen Ausbildungen der Erkennungs-Einrichtungen können jeweils für sich allein oder auch in Kombination miteinander vorgesehen sein. Selbiges gilt für die verschiedenen Ausbildungen der Codiereinrichtung bzw. Freischaltfunktion an dem Putzwerkzeug.

Neben dem Schutz des Handteils vor unbeabsichtigtem Einschalten und unsachgemäßer Verwendung nicht kompatibler Putzwerkzeuge kann eine Codierung der Putzwerkzeuge und deren Erfassung durch das Handteil vorteilhafterweise zur Realisierung weiterer Funktionen ausgenutzt werden. Insoweit kann es vorgesehen sein, daß das Handteil in Abhängigkeit des jeweils erfaßten Putzwerkzeugs eine oder vorzugsweise mehrere Funktionen der Zahnputzvorrichtung steuert. Insbesondere kann die Steuereinrichtung des Handteils, unter der Annahme, daß jeder Benutzer des Handteils ein eigenes Putzwerkzeug benutzt, anhand der erfaßten Putzwerkzeugcodierung selbsttätig feststellen, welcher der Benutzer die Zahnputzvorrichtung gerade benutzt. Es ist keine Eingabe seitens des Benutzers wie zum Beispiel ein Knopfdruck und dergleichen notwendig, um der Zahnputzvorrichtung mitzuteilen, wer sie benutzt. Es kann eine automatische Anpassung von Betriebsparametern oder Vorrichtung an den jeweiligen Benutzer erfolgen. Hierdurch wird ein Höchstmaß an Benutzerfreundlichkeit erzielt. Insbesondere können mittels der Steuereinrichtung Betriebsparameter wie Putzfrequenz, -geschwindigkeit und -zeit bzw. Anpreßdruckschwellwert oder -sollwertbereich automatisch an den jeweils erfaßten Benutzer angepaßt werden. Es können verschiedene Benutzerprofile eingestellt und abgespeichert werden, von denen eines von der Steuervorrichtung zur Anwendung gebracht wird, nachdem zu Beginn des Putzvorgangs die Codierung des gerade verwendeten Putzwerkzeugs erfaßt und damit der jeweilige Benutzer bestimmt worden ist. Die Codierungs- und/oder Erkennungseinrichtung hat hierzu ein entsprechendes Signal an die Steuereinrichtung gegeben. Bei elektrischen Zahnbürsten kann die Motordrehzahl beispielsweise bei einem Kind als Benutzer gegenüber der sonst für Erwachsene üblichen Drehzahl reduziert werden, so daß für das Kind eine schonendere Zahnreinigung durchgeführt wird. Die Steuervorrichtung kann ferner in Abhängigkeit eines Signals der Codierungs- und/oder Erfassungseinrichtung die Zeitdauer eines Timers je nach dem erfaßten Benutzer variieren, beispielsweise bei Kindern auf zwei Minuten und bei Erwachsenen auf drei Minuten einstellen. Auch könnte die Art der Signalgebung des Timers modifiziert werden und beispielsweise bei Kindern als Melodie und bei Erwachsenen als Summton eingestellt werden. Auch bietet es sich an, daß Daten für neue Timer-Melodien in der Aufsteckbürste gespeichert oder hinterlegt und von der Aufsteckbürste zum Handstück übertragen und gegebenenfalls dort abgespeichert werden.

Es können jedoch auch benutzerspezifische Daten wie Putzfrequenz, -geschwindigkeit, -zeit, Zeitspanne zwischen Putzvorgängen, oder Anpreßdruck automatisch in Abhängigkeit eines entsprechenden Signals der Erkennungseinrichtung benutzerspezifisch gespeichert, verarbeitet und beispielsweise an einem Display angezeigt werden. Auch hierdurch wird ein erhöhter Bedienungskomfort erreicht.

Der jeweilige Benutzer wird also mittelbar anhand des verwendeten Putzwerkzeugs bzw. dessen Codierung von dem Handteil erfaßt bzw. bestimmt. Es kann auch eine spezifische Funktionssteuerung in Abhängigkeit des verwendeten Putzwerkzeugtyps vorgesehen sein. Z. B. können Betriebsparameter des Handteils automatisch verändert werden, wenn eine Aufsteckbürste mit bestimmten Eigenschaften wie große Härte oder geringe Härte verwendet wird. Ebenso kann ein anderes Betriebsprogramm aufgerufen werden, wenn ein Putzwerkzeug eines anderen Typs wie z.B. Interdentalreiniger, Zahnfleischmassierer oder Zungenschaber auf das Handteil aufgesetzt ist. Je nach individuellem und/oder personenbezogenem, austauschbarem Reinigungswerkzeug können die Drehzahl, Sollputzzeitdauer, Antriebsbewegung, Putzfrequenz, -geschwindigkeit, Anpreßdruckschwellenwert etc. angepaßt werden.

Ferner kann durch das unverwechselbare Erkennen eines individuellen Reinigungs- oder Putzwerkzeuges bzw. Refills präzise dessen Abnutzung bestimmt werden, z.B durch Auswerten der zeitlichen Vergangenheit dieses Putzwerkzeugs, insbesondere der Benutzungszeit. Bei Putzwerkzeugen mit chemischen Zusatzstoffen kann durch den mittels der Codierung hinterlegten Herstellzeitpunkt deren Verfallszeit erkannt werden. Vorgegebene Reinigungs- oder Wartungsintervalle können angezeigt werden.

Nach einer bevorzugten konstruktiven Ausführungsform sind zur Realisierung der Freischaltfunktion in dem Handteil der Zahnbürste ein RFID-Lesegerät (RFID = radio frequency identification) vorgesehen, wobei unter Lesegerät das Erfassungsgerät für die kontaktlos übertragenen Daten eines im Bürstenteil vorgesehen Transponders verstanden wird. Das RFID-Lesegerät und der Transponder oder ein sonstiger kontaktloser Datenträger weisen jeweils ein Koppelelement auf, welches beispielsweise eine Spule oder auch eine Mikrowellenantenne sein kann, wobei über diese Koppelelemente zwischen dem Lesegerät und dem kontaktlosen Datenträger Daten, Taktimpulse bzw. Energie ausgetauscht werden. So besteht die Möglichkeit, mittels des Lesegerätes, welches auch als Transceiver (Transmitter/Receiver) bezeichnet wird, Daten oder Informationen von dem Transponder zu empfangen. Umgekehrt können aber mittels des Lesegerätes gegebenenfalls auch Daten in den Transponder eingeschrieben werden. So besteht beispielsweise die Möglichkeit, in den Transponder Daten bezüglich des Benutzers des individuellen Bürstenteils oder auch Daten bezüglich der Putz- bzw. Benutzungszeitdauer eines individuellen Bürstenteils einzuschreiben, so daß gegebenenfalls nach Ablauf einer gewissen, maximalen Putzzeitdauer der Benutzer daran erinnert werden kann, gegebenenfalls das Bürstenteil gegen ein neues auszutauschen. Energie wird vom Lesegerät zum Transponder im allgemeinen dann übertragen, wenn es sich um einen passiven Transponder, also einen Transponder ohne eigene Energieversorgung handelt. Die von dem Lesegerät zum Transponder übertragene Energie wird dann zur Aktivierung des Transponders verwendet. Für den Fall, daß ein aktiver Transponder, also ein Transponder mit eigener Energieversorgung, beispielsweise einer Knopfzelle als Batterie oder dergleichen, eingesetzt wird, versteht es sich, daß in diesem Falle eine Übertragung von Energie zur Aktivierung des Transponders nicht erforderlich ist. Als Elemente für die kontaktlose Kopplung von Lesegerät und Transponder ist im vorliegenden Fall für elektrische Zahnreinigungsgeräte bevorzugt eine induktive bzw. magnetische Kopplung vorgesehen. In der Fachliteratur werden derartige Kopplungen als induktive Funkanlagen bzw. als inductively coupled short range device bezeichnet. Die Betriebsfrequenz liegt in vorliegendem Anwendungsfall bevorzugt bei 13,56 MHz. Der Transponder selbst kann als 1-bit- oder multi-bit-Transponder ausgebildet sein. Die Informations- bzw. Datenübertragung zwischen Transponder und Lesegerät wird bevorzugt mittels einer Lastmodulation im Transponder durchgeführt, wozu ein Lastwiderstand im Transponder in einer Taktfrequenz bzw. einer gewissen Impulsfolge zu- oder weggeschaltet wird, wodurch über die induktive Kopplung im Lesegerät Rückwirkung bzw. Rückkopplung erzeugt wird und die Daten zwischen Transponder und Lesegerät bzw. umgekehrt übertragen werden können.

Zusammenfassend soll der Kern bzw. Grundgedanke vorliegender Erfindung, auch unabhängig von der Formulierung in den Ansprüchen, dargestellt werden: Das Freischaltorgan bzw. die -funktion am Putzwerkzeug für die Freischaltung der Betriebssperrvorrichtung bzw. -funktion kann im einfachsten Fall der Ausbildung der Codierungs- und/oder Erfassungseinrichtung bzw. -funktion derart gestaltet sein, daß lediglich die Anwesenheit bzw. Nichtanwesenheit (1 -bit-Information) einer Ersatzbürste am Handteil detektiert werden kann. Hierzu kann beispielsweise in der Bürste ein Geber angeordnet sein, der mit einem im Handteil angeordneten Nehmer derart korrespondiert, daß im gekuppelten Zustand von Putzwerkzeug und Handteil der Nehmer von dem Geber ein bevorzugt digitales Signal erhält und beispielsweise die vorgesehene Betriebssperrvorrichtung deaktiviert, so daß das Handteil und damit auch das Putzwerkzeug mittels des Antriebes in Gang gesetzt werden kann. Durch diese Maßnahme wird eine konstruktiv einfache sogenannte Reisesicherung für das Handteil geschaffen, welches bei Einsatz der geschilderten Maßnahmen ohne angekuppeltes Putzwerkzeug mit Geber nicht in Betrieb gesetzt werden kann. Demnach ist es ausreichend, zur Aktivierung der Reisesicherung das Putzwerkzeug und Handteil voneinander zu entkuppeln. Weitere Maßnahmen zur Blockierung beispielsweise des Ein- oder Ausschalters des Handteils oder sonstige Mittel sind nicht erforderlich. Im übrigen hilft auch die Anordnung eines solchen Gebers im Putzwerkzeug, der im angekuppelten Zustand mit einem Nehmer des Handteils korrespondiert bzw. kommuniziert, daß der Betrieb des Handteils mit nicht kompatiblen Putzwerkzeugen vermieden werden kann, da solche inkompatiblen Putzwerkzeuge herstellerseitig in der Regel nicht mit einem entsprechenden Geber, der fähig wäre, mit dem Nehmer des Handteils zu kommunizieren, ausgestattet sind. Hierdurch können mechanische Probleme und Risiken bei der Verwendung nicht passender Aufsteckbürsten vermieden werden. Dies ist die einfachste Form einer Codierungs- und/oder Erfassungseinrichtung bzw. -funktion, die relativ einfach aufgebaut ist und lediglich eine Entscheidung darüber erlaubt, ob ein Putzwerkzeug mit dem Handteil gekuppelt ist bzw. ob überhaupt ein kompatibles Putzwerkzeug mit dem Handteil gekuppelt ist.

Für Ausnahmesituationen kann es auch vorgesehen sein, den normalerweise im Putzwerkzeug vorgesehenen Geber, beispielsweise Transponder oder dergleichen bzw. die Codierungseinrichtung als separat handhabbares Teil dem Endverbraucher isoliert zur Verfügung zu stellen bzw. am Handstück selbst vorzusehen. Diese Vorgehensweise bietet sich beispielsweise dann an, wenn der Endbenutzer bereits ein Handstück mit einer Betriebssperrvorrichtung besitzt, jedoch noch eine Anzahl an Putz- oder Reinigungswerkzeugen im Haushalt als Vorrat hat, die mit einem Freischaltorgan bzw. einem Geber zum Freischalten der Betriebssperre des Handteils oder Handstücks nicht ausgerüstet sind. Um zu gewährleisten, daß diese in der Regel älteren Ersatz-Reinigungswerkzeuge, welche an und für sich mechanisch kompatibel mit dem neueren Handstück sind, jedoch ein Freischaltorgan, welches mit der in dem Handstück vorgesehenen Betriebssperrvorrichtung kommunizieren und diese freischalten könnte, noch nicht aufweisen, dennoch verwenden zu können, kann es sich daher anbieten, das Freischaltorgan bzw. den Geber oder Transponder dem Endverbraucher als eigenständig handhabbares Bauteil zur Verfügung zu stellen bzw. für das Freischaltorgan in diesen Ausnahmefällen am Handstück eine Befestigungsvorrichtung vorzusehen. So kann beispielsweise von dem Endbenutzer dieses Freischaltorgan bzw. der Geber direkt an dem Handteil bzw. Handstück mit der Betriebssperrvorrichtung, beispielsweise an der Gehäuseaußenseite im Bereich des Nehmers des Handteils befestigt werden und für derartige Sonder- oder Ausnahmefälle die Betriebssperrvorrichtung des Handteils durch Anordnung des Gebers am Handteil selbst und nicht an dem Reinigungswerkzeug sozusagen außer Betrieb gesetzt werden. Infolgedessen kann das Handstück auch mit Reinigungswerkzeugen, die an und für sich mechanisch kompatibel sind, betrieben werden, die selbst eine Freischaltfunktion bzw. einen mit der Betriebssperrvorrichtung kommunizierenden Geber noch nicht aufweisen. Diese Maßnahme kann auch dann vorgesehen werden, wenn beispielsweise aus Kostengründen nicht sämtliche Ersatz-Reinigungswerkzeuge, welche kompatibel oder mechanisch passend mit dem Handteil bzw. Handstück sind, mit einem solchen Freischaltorgan, einer Codiervorrichtung oder einem Geber ausgestattet werden sollen. Es versteht sich, daß diese Maßnahme der unmittelbaren Anbringung des Freischaltorgans an dem Handteil, beispielsweise durch den Benutzer, eine Ausnahmesituation darstellt und daher im Regelfall das Freischaltorgan am Bürstenteil oder Reinigungsteil anzuordnen ist.

Weiterhin kann die Codierungs-Erfassungseinrichtung auch derart ausgebildet sein, daß die Ankupplung eines Putzwerkzeuges mit einigen wenigen Unterscheidungsmöglichkeiten (mehr-bit-Information) von Putzwerkzeugen möglich ist. Während die zuerst beschriebene Codierungs- und/oder Erfassungseinrichtung bzw. -funktion beispielsweise nur eine Ja/Nein-Entscheidung zuläßt, nämlich ob ein kompatibles Putzwerkzeug mit dem Handteil gekuppelt ist oder nicht, lassen sich mit einer modifizierten Codierungs- und/oder Erfassungseinrichtung bzw. -funktion, die beispielsweise zwei, vier oder sechs unterschiedliche Codierungen des Putzwerkzeuges zu erkennen erlaubt, neben der Reisesicherung weitere Funktionen realisieren. So kann beispielsweise dann von dem Handteil erkannt werden, ob eine Erwachsenen-Zahnbürste (harte Borsten) oder eine Kinder-Zahnbürste (weiche Borsten) mit dem Handteil gekuppelt sind, ein Interdentalreiniger anstelle einer Zahnbürste verwendet wird oder auch andere Parameter unterschieden werden. Gegebenenfalls kann über die jeweilig erkannte Codierung eine individuelle Ansteuerung der Steuereinrichtung für den Antrieb durchgeführt werden, so z. B. eine Steuerung der Geschwindigkeit des Antriebes, beispielsweise der Drehzahl oder auch der Sollputzzeitdauer oder dergleichen. In diesem Fall des Vorsehens einer Codierung bzw. Codierungs- und/oder Erfassungseinrichtung bzw. -funktion mit wenigen (zwischen ca. zwei und ca. zehn) Unterscheidungsmöglichkeiten besteht jedoch noch nicht die Möglichkeit, ein individuelles Putzwerkzeug aus einer Millionenzahl von vom Hersteller in den Handel gebrachten Putzwerkzeugen zu erkennen. Vielmehr ist es mit diesen begrenzten Unterscheidungsmöglichkeiten allenfalls möglich, einen speziellen Typ von Putzwerkzeug (Kinderzahnbürste, Erwachsenenzahnbürste, Interdentalzahnbürste, Flosser-Reinigungsgerät, jeweils als Aufsteckteil für das Handteil ausgebildet) zu erkennen bzw. einige personenbezogene Putz- oder Reinigungswerkzeuge zu unterscheiden.

Sofern mit der Codierungs- und/oder Erfassungseinrichtung bzw. -funktion jedes einzelne, individuelle vom Hersteller hergestellte Putzwerkzeug, welches mit dem Handteil als kompatibles Teil kuppelbar ist, erkannt werden soll, sind eine Vielzahl von Unterscheidungsmöglichkeiten (multi-bit-Information) im Bereich von ca. 10⁶ bis ca. 10¹² vorzusehen, wozu in aller Regel ein Transponder oder dergleichen elektronische Mittel Anwendung finden. In diesem Fall ist eine Erkennung eines individuellen, vom Hersteller gelieferten Putzwerkzeuges, welches mit dem Handteil gekoppelt ist, möglich. Hierdurch wird zusätzlich zu den bereits erwähnten Möglichkeiten bei einfacheren Codierungen die Voraussetzung dafür geschaffen, daß beispielsweise der Abnutzungsgrad des Putzwerkzeuges durch Auswertung der Vergangenheit genauer bestimmt werden kann. Bei Ersatzreinigungswerkzeugen mit chemischen Zusatzstoffen können durch den in der Codierung angegebenen Herstelltermin Verfallszeiten erkannt werden oder auch vorgegebene Reinigungs- oder Wartungsintervalle des Putzwerkzeuges angegeben bzw. eingehalten werden.

Unabhängig davon, wie einfach oder kompliziert die Codierung des Putzwerkzeuges sowie die Codierungs- und/oder Erfassungseinrichtung bzw. -funktion aufgebaut sind, kann in jedem Fall mit der Freischaltfunktion für die Betriebssperrfunktion am Handteil für die Realisierung einer Reisesicherung gesorgt werden, indem das insbesondere kompatible Putzwerkzeug von dem Handteil abgekuppelt wird und infolgedessen ein Inbetriebsetzen des Handteils nicht mehr möglich ist. Ebenso ist auch ein Inbetriebsetzen des Handteils bei jeder dieser Codierungen, unabhängig davon, ob eine 1-bit oder multi-bit Lösung eingesetzt wird, vermieden, sofern das Putzwerkzeug eine Codierung bzw. ein Freischaltorgan überhaupt nicht aufweist. Wird ein solchermaßen nicht codiertes bzw. nicht mit einem Freischaltorgan vorgesehenes Putzwerkzeug mit dem Handteil gekoppelt, kann der im Handteil positionierte Nehmer, Sender, Empfänger oder dergleichen Lesegerät mit dem im nicht kompatiblen Putzwerkzeug nicht vorhandenen Geber, Empfänger, Sender, Transponder oder dergleichen Mittel nicht in Kommunikation treten, so daß genauso wie im Falle eines kompatiblen, aber nicht mit dem Handteil gekuppelten Putzwerkzeuges das Vorhandensein dieses nicht kompatiblen Putzwerkzeuges am Handteil nicht erkannt wird und somit das Handteil aufgrund des fehlenden Freischaltorgans und der damit fehlenden möglichen Deaktivierung der Betriebssperrvorrichtung nicht in Betrieb gesetzt werden kann.

In der grundsätzlich einfachsten Ausführungsform der Codierung des Putzwerkzeuges bzw. der Ausbildung der Codierungs- und/oder Erfassungseinrichtung bzw. -funktion im Handteil der elektrischen Zahnputzvorrichtung ist lediglich dafür Sorge zu tragen, daß die Codierungs- und/oder Erfassungseinrichtung bzw. -funktion im Handteil in der Lage ist zu erkennen, ob ein richtiges, d. h. kompatibles Putzwerkzeug dem Handteil angekuppelt ist oder nicht. Ist ein derartiges richtiges, d. h. kompatibles Putzwerkzeug dem Handteil nicht angekuppelt, läßt sich das Handteil nicht in Betrieb setzen, da dem Putzwerkzeug ein Freischaltorgan nicht zugeordnet ist, welches eine im Handteil vorgesehene Betriebssperrvorrichtung deaktivieren könnte. Ist hingegen ein kompatibles Putzwerkzeug mit dem Freischaltorgan bzw. der passenden Codierung dem Handteil angekoppelt, wird spätestens beim Betätigen des Ein-/Ausschalters des Handteils das Vorhandensein der richtigen Codierung bzw. des Freischaltorgans mittels einer Erfassungseinrichtung im Handteil erkannt und die Betriebssperrvorrichtung deaktiviert sowie das Handteil in Gang gesetzt, so daß das Putzorgan, beispielsweise der Bürstenkopf des Putzwerkzeugs mittels des Antriebes des Handteils in Betrieb gesetzt wird.

Insoweit ist auch ein Verfahren zum Betreiben einer elektrischen Zahnreinigungs- oder Zahnputzvorrichtung bestehend aus einem Handteil und einem aufsteckbaren bzw. ankuppelbaren Reinigungswerkzeug, z. B. eine Aufsatzbürste oder dergleichen offenbart, wobei Handstück und Reinigungswerkzeug im gekuppelten Zustand miteinander kommunizieren bzw. Daten kontaktlos bzw. berührungslos übertragen oder austauschen bzw. Mittel im Handstück vorgesehen sind, die in der Lage sind, zu erfassen, ob einerseits ein Reinigungswerkzeug am Handstück angekuppelt ist und/oder ob es sich andererseits bei dem an das Handstück angekuppelte Reinigungswerkzeug um ein zum Handstück kompatibles Reinigungswerkzeug handelt. Ist ein Reinigungswerkzeug nicht an das Handstück angekuppelt, so wird diese Information dazu benutzt, ein Einschalten des elektrischen Antriebes des Handstückes beispielsweise mittels des am Handstück vorgesehenen Einschalters zu unterdrücken. Dies kann durch eine Betriebssperrvorrichtung im Handstück geschehen. Somit ist es nicht möglich, das Handstück ohne angekuppeltes bzw. aufgestecktes Reinigungswerkzeug in Betrieb zu setzen, wodurch eine komfortable Reiseeinschaltsicherung bereitgestellt wird. Weiterhin zeichnet sich das Verfahren auch dadurch aus, daß das Reinigungswerkzeug eine Freischaltfunktion aufweist, welche einer im Handstück angeordneten Erfassungseinrichtung signalisiert, daß das Reinigungswerkzeug dem Handstück angekuppelt ist und die Betriebssperrvorrichtung deaktiviert bzw. freigeschaltet werden kann, so daß das Zahnreinigungsgerät durch Einschalten des elektrischen Antriebes in Gang gesetzt werden kann. Sofern jedoch das Reinigungswerkzeug ein derartiges Freischaltorgan nicht besitzt, kann selbst im gekuppelten Zustand von Reinigungswerkzeug und Handstück der Antrieb des Handstückes nicht in Gang gesetzt werden, da bei einem fehlenden Freischaltorgan an dem Reinigungswerkzeug im allgemeinen davon ausgegangen werden muß, daß es sich um ein zum Handstück nicht kompatibles Reinigungswerkzeug handelt.

Weitere Ausgestaltungen des Verfahrens bestehen auch darin, die dem Handteil anzukuppelnden, verschiedenen Reinigungswerkzeuge personenbezogen, reinigungswerkzeugbezogen oder dergleichen zu codieren, so daß dem Handteil bzw. Handstück über eine entsprechende Erfassungseinrichtung der Codierung nicht nur das Ankuppeln bzw. Nichtankuppeln eines Reinigungswerkzeuges oder auch eines kompatiblen Reinigungswerkzeuges, sondern auch die Art des verwendeten Reinigungswerkzeuges bzw. die das Reinigungswerkzeug benutzende individuelle Person mitgeteilt werden kann, so daß entsprechende Parameter oder auch Betriebsparameter des Handstücks personen- und/oder reinigungswerkzeugbezogen eingestellt bzw. gespeichert werden können. Diese einzelnen Maßnahmen sind im Rahmen der Beschreibung der Vorrichtungen im Detail erläutert und gehören auch als erfindungsbedeutsame Bestandteile zum vorliegenden Verfahren. Es bleibt anzumerken, daß im Rahmen der vorliegenden Anmeldung die Begriffe Betriebssperrvorrichtung sowie Codierungs- und/oder Erfassungseinrichtung bzw. -funktion bzw. Erkennungseinrichtung sowie die Begriffe Freischaltorgan und Codiereinrichtung bzw. Codiermittel bzw. -vorrichtung und -funktion auch synonym verwendet werden und in jedem einzelnen Fall austauschbar gegeneinander sind, ohne den Rahmen der Erfindung zu verlassen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand vorliegender Erfindung, auch unabhängig von ihrer Zusammenfassung in den Ansprüchen oder deren Rückbeziehung.

Es zeigen:
- Figur 1: eine perspektivische Darstellung einer elektrischen Zahnbürste mit einem Handteil und einer auf dieses aufsteckbaren Aufsteckbürste,
- Figur 2: eine schematische Längsschnittansicht des Handteils der elektrischen Zahnbürste aus Figur 1, die dessen Gehäuse, den darin angeordneten Antriebsmotor mit Getriebe und Antriebswelle, den Akku für den Antriebsmotor sowie das Lademodul für den Akku zeigt,
- Figur 3: eine schematische Darstellung einer elektrischen Zahnbürste mit einer Aufsteckbürste mit aufgeklebtem oder integriertem Transponder und einer entsprechenden Erfassungseinrichtung zur kontaktlosen Datenübertragung im Handteil gemäß einer weiteren bevorzugten Ausführung der Erfindung,
- Figur 4: eine perspektivische Ansicht der Zahnbürste aus Figur 3,
- Figur 5: eine auschnittsweise Schnittansicht einer Zahnbürste ähnlich Figur 3 und 4, die die Anordnung eines Transponderchips in einem stirnseitigen Codierring der Aufsteckbürste sowie einer Sende- und Empfangsspule nebst zugehöriger Auswerteelektronik im Handteil zeigt, wobei die Aufsteckbürste auf das Handteil gesteckt ist,
- Figur 6: in perspektivischer, schematischer Ansicht eine Ausführungsform des erfindungsgemäßen Handteils bei abgenommenem Gehäuse,
- Figur 7: in schematischer, perspektivischer Darstellung den vorderen Abschnitt einer weiteren Ausführungsform des Handteils mit abgenommenem Gehäuse,
- Figur 8: ein weiteres Ausführungsbeispiel des kupplungsseitigen Abschnitts eines Ausführungsbeispiels des Handteils im Längsschnitt,
- Figur 9: das Handteil der Figur 7 im Querschnitt, wobei die Schnittebene ca. im Bereich der Spule im wesentlichen senkrecht zur Längsachse bzw. Drehachse der Antriebswelle angeordnet ist,
- Figur 10: eine Teilansicht eines Ausführungsbeispiels der Aufsteckbürste, wobei die Wandung des Schaftes im Bereich einer Profilhülse teilweise weggebrochen und diese im Schnitt dargestellt ist,
- Figur 11: die Aufsteckbürste der Figur 10 im Längsschnitt,
- Figur 12: die Aufsteckbürste der Figur 10 im Querschnitt im Bereich der Spule, wobei die Schnittebene im wesentlichen senkrecht zur Längsachse bzw. Drehachse angeordnet ist.
- Figur 13: eine schematische perspektivische Ansicht der Profilhülse mit darauf angebrachtem Transponder und Spule und angrenzender Aufsteckwelle,
- Figur 14A: den Profilring mit Transponder und Spule, teilweise aus dem Schaft der Aufsteckbürste herausgezogen, in perspektivischer Darstellung,
- Figur 14B: die Aufsteckbürste mit um den Schaft bzw. das Rohr gewickelter Spule,
- Figur 15: eine Seitenansicht von Profilring mit Transponder und Spule und Teilabschnitten der Aufsteckwelle der Aufsteckbürste,
- Figur 16: die Anordnung der Figur 15, jedoch um ca. 90° gedreht,
- Figur 17: die Anordnung der Figur 15, um ca. 180° gedreht in Schnittdarstellung,
- Figur 18: eine zu Figur 5 vergleichbare Darstellung, wobei die Anordnung der Spulen modifiziert und Ferritkörper zur Verbesserung des Kopplungsfaktors der Spulen vorgesehen sind,
- Figur 19: in schematischer Darstellung ein Blockdiagramm der Steuereinrichtung mit Lesegerät, Auswerteelektronik und Betriebssperrvorrichtung als Bestandteil des Handteils sowie den Transponder als Bestandteil der Aufsteckbürste, wobei Handteil und Aufsteckbürste mechanisch sowie elektro- und/oder magnetisch, bevorzugt induktiv, gekoppelt sind, zur grundsätzlichen Erläuterung.

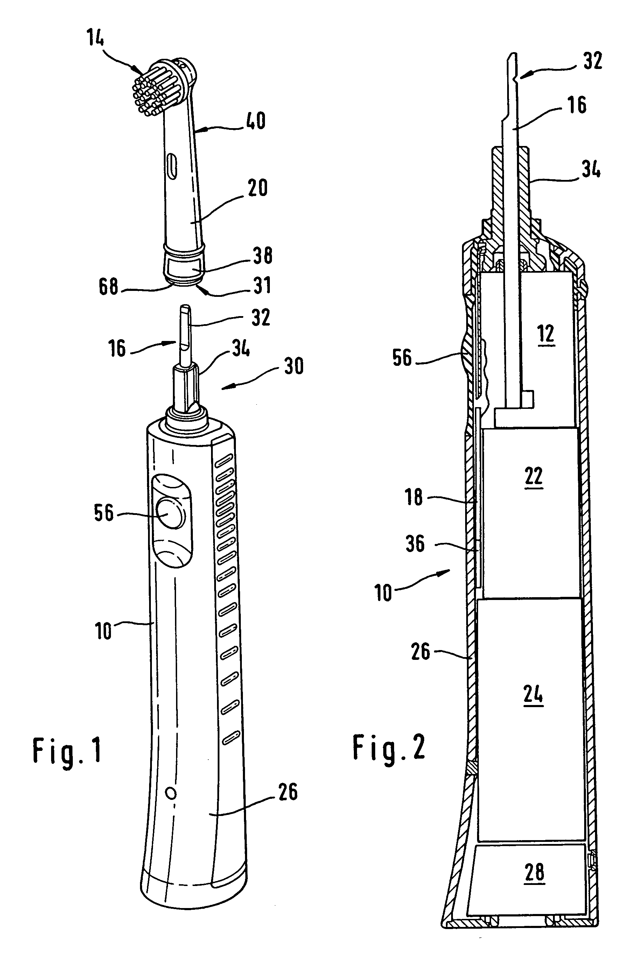

Die in den Figuren gezeigte elektrische Zahnbürste besitzt ein Handteil 10 mit einem geschlossenen Gehäuse 26, in dem unter anderem, wie in Figur 2 dargestellt, in an sich bekannter Weise ein Elektromotor 22, eine Energieversorgung, insbesondere ein Akku 24, der über ein bodenseitig angeordnetes Lademodul 28 an eine Ladestation ankoppelbar ist, sowie eine Steuereinrichtung 18, die eine Leiterplatte mit einem Mikroprozessor oder ASIC oder sonstigen elektrischen Bauteilen umfaßt, untergebracht sind. Auf das Handteil 10 ist als Putz- oder Reinigungswerkzeug eine Aufsteckbürste 20 bzw. Ersatzbürste stirnseitig aufsetzbar, die gegebenenfalls benutzerspezifisch farblich gekennzeichnet sein kann. Mittels einer Kupplung 30 kann die Aufsteckbürste 20 mechanisch an das Handteil 10 angekuppelt werden, um die Antriebsbewegung des Elektromotors über eine Antriebswelle 16 des Handteils 10 auf den Bürstenkopf 14 der Aufsteckbürste 20 zu übertragen. Die ein- oder mehrteilige bzw. -stückige Kupplung 30 umfaßt einerseits eine formschlüssige oder kraftschlüssige Festlegung des Putzwerkzeugkorpus an sich, sowie andererseits eine Antriebskupplung, die die Antriebsbewegung des Antriebs auf den Bürstenkopf 14 der Aufsteckbürste 20 überträgt. Aus dem Handteil 10 ragt stirnseitig eine Antriebswelle 16, die vom Antriebsmotor 22 über ein Getriebe 12 in an sich ebenfalls bekannter Weise antreibbar rotierend oszillierend oder rotierend bzw. eine Drehachse 72, ist. Die Antriebswelle 16 besitzt einen Kupplungsabschnitt 32, auf den eine in dem Putzwerkzeug 20 angeordnete Aufsteckwelle 62 mit einem komplementären Kupplungsabschnitt formschlüssig, kraft- oder reibschlüssig aufsetzbar ist, so daß die Antriebsbewegung übertragen und der Bürstenkopf 14 der Aufsteckbürste alternierend oszillierend, beispielsweise mit einem Schwenkwinkel im Bereich zwischen ± 10° bis ± 60° und mit einer Frequenz im Bereich von 40-150 Hz, schwingend, beispielsweise mit einer Amplitude von 0,05 mm bis 2 mm und einer Frequenz im Bereich von ca. 100 Hz bis 400 Hz, etc. um eine Drehachse 72 und/oder Schwenkachse 58 oder rotierend antreibbar ist. Einzelheiten der mechanischen Kupplung sowie des Antriebes bzw. der Antriebsbewegung bzw. des konstruktiven Aufbaus von Handteil und Aufsteckbürste sind in den Publikationen WO 91/07117 (05544), WO 94/12121 (05824), WO 99/20202 (06210), WO 98/01083 (06107), WO 98/47444 (06176) der Anmelderin offenbart, die durch ausdrücklichen Rückbezug in den Offenbarungsgehalt der vorliegenden Patentanmeldung aufgenommen werden.

Die Steuereinrichtung 18 weist z. B. in elektronischer Form eine Betriebssperrvorrichtung 36 oder Betriebssperrfunktion auf, die den Antrieb des Handteils 10, insbesondere den Elektromotor 22 sperrt und nur bei bzw. nach dem Aufstecken einer kompatiblen Aufsteckbürste 20 auf das Handteil 10 den Betrieb des Antriebs freigibt bzw. ein Einschalten des Elektromotors 22 mittels eines Einschalters 56 am Handstück 10 zuläßt. Die elektronische Betriebssperrvorrichtung 36 wird mittels eines an der Aufsteckbürste 20 vorgesehenen Freischaltorgans 38 oder eine Freischaltfunktion deaktiviert bzw. aktiviert. Dabei kann die Freischaltfunktion bzw. das Freischaltorgan 38 eine Codierung als sogenannten elektronischen Schlüssel besitzen.

Um die jeweils aufgesteckte Aufsteckbürste 20 zu erkennen, ist am Handteil 10 eine Codierungs-Erfassungseinrichtung bzw. eine Vorrichtung zur Erfassung des Vorhandenseins des Freischaltorgans 38 vorgesehen. In Abhängigkeit eines Signals dieser Vorrichtung bzw. Codierungs-Erfassungseinrichtung schaltet die Steuereinrichtung 18 bzw. Betriebssperrfunktion den Antrieb bzw. Elektromotor 22 frei oder nicht frei, so daß der Elektromotor 22 mittels des Einschalters 56 gegebenenfalls in Betrieb genommen werden kann.

Ganz allgemein ist es vorgesehen, in dem Bürstenteil bzw. der Aufsteckbürste 20 einen Daten- oder Informationsspeicher, insbesondere für digitale Informationen, vorzusehen, der mit einem Daten- oder Informationsleser im Handstück oder Handteil 10 der elektrischen Zahnbürste dann eine Datenübertragung oder einen Datenaustausch in drahtloser Form, d. h. ohne leitende Verbindung zwischen Bürstenteil und Handteil, durchführt.

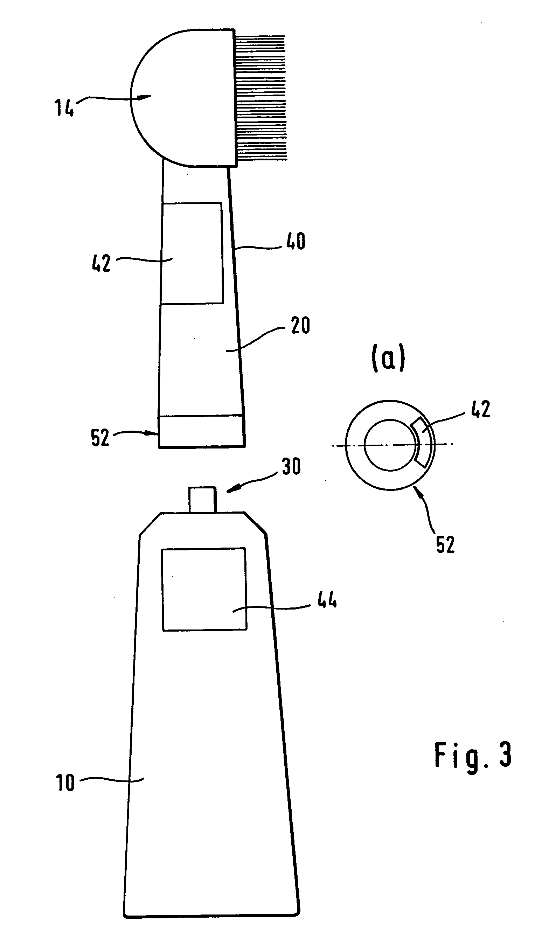

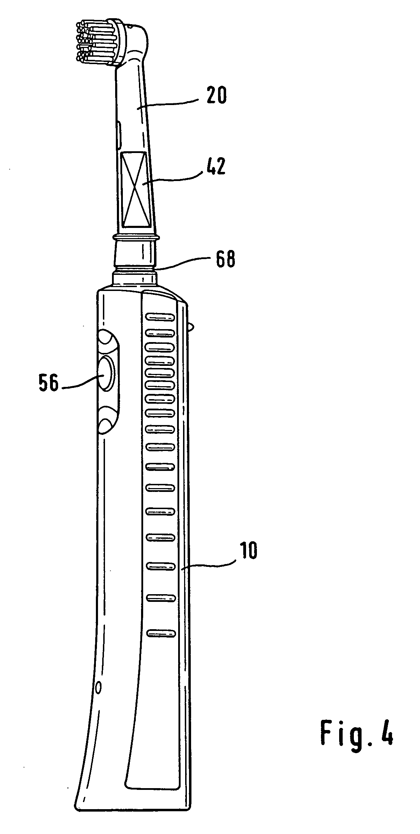

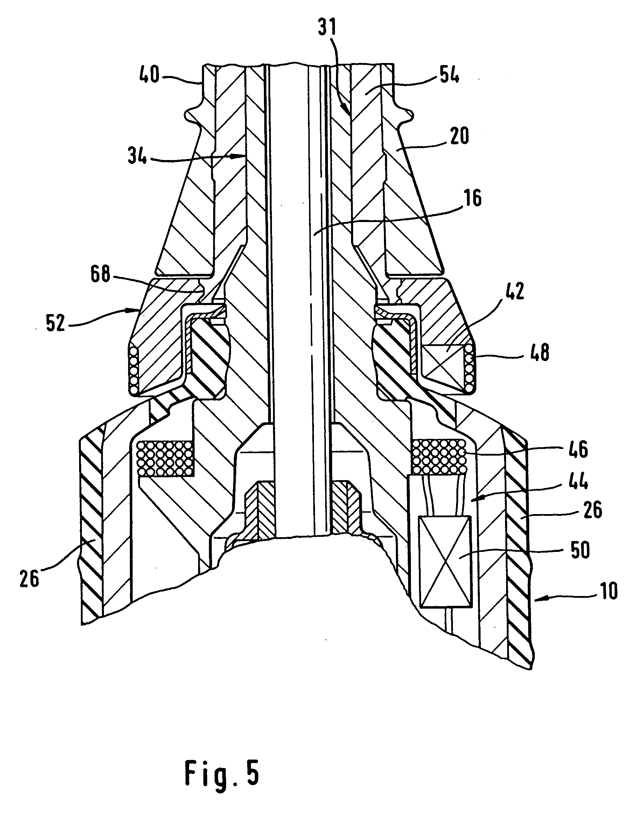

Die Figuren 3 bis 5 zeigen eine Ausführungsform einer erfindungsgemäßen elektrischen Zahnbürste mit drahtlosem Datentransfer zwischen Bürstenteil und Handteil, bei der das Vorhandensein der mit dem Handstück 10 gekoppelten jeweiligen Aufsteckbürste 20 bzw. Eigenschaften der Aufsteckbürste 20 über digitale Signale erfaßt bzw. bestimmt wird. Die Aufsteckbürste 20 ist hierzu mit einem Transponder 42 versehen, der beispielsweise in Form eines Etiketts als sogenanntes Smartlabel der Aufsteckbürste 20 auf- bzw. angeklebt sein kann (Figur 4). Der Transponder 42 kann vorteilhafterweise auch in dem farbigen Aufsteckring 52 an der Stirnseite der Aufsteckbürste 20 enthalten sein (vgl. Figuren 3 und 5). In dem Handteil 10 ist ein auf den Transponder 42 abgestimmter Detektor bzw. ein Lesegerät 44 vorgesehen, der sowohl als Signalsender als auch als Signalempfänger dient. Der Detektor bzw. das Lesegerät 44 im Handteil 10 sendet zunächst über die Spule 46 elektromagnetische Wellen zu der mit dem Transponder 42 verbundenen Spule 48 aus, um den Transponder 42 bzw. dessen Mikrochip mit Energie zur Aktivierung zu versorgen. Der Transponder 42 speichert die Energie, wird aktiviert und sendet eine spezifische, gespeicherte Kennung bzw. ein Signal oder Daten an den Detektor bzw. das Lesegerät 44 zurück, der oder das diese empfängt oder aufnimmt, mittels einer Auswerteelektronik 50 identifiziert und ein entsprechendes Signal an die Steuereinrichtung 18 bzw. die Betriebssperrvorrichtung 36 des Handteils 10 abgibt. Die Spulen 46 und 48 können jeweils sowohl als Sende- als auch als Empfangsteil bzw. Übertragungsteil betrieben werden. Sie sind in einer bevorzugten Ausführungsform einander gegenüberliegend jeweils an den Stirnseiten der Aufsteckbürste 20 bzw. des Handteils 10 angeordnet (vgl. Fig. 5). Aufgrund der von dem Transponder 42 zurückgesandten Kennung bzw. Daten kann die Aufsteckbürste 20 identifiziert bzw. das Vorhandensein am Handstück 10 erkannt werden.

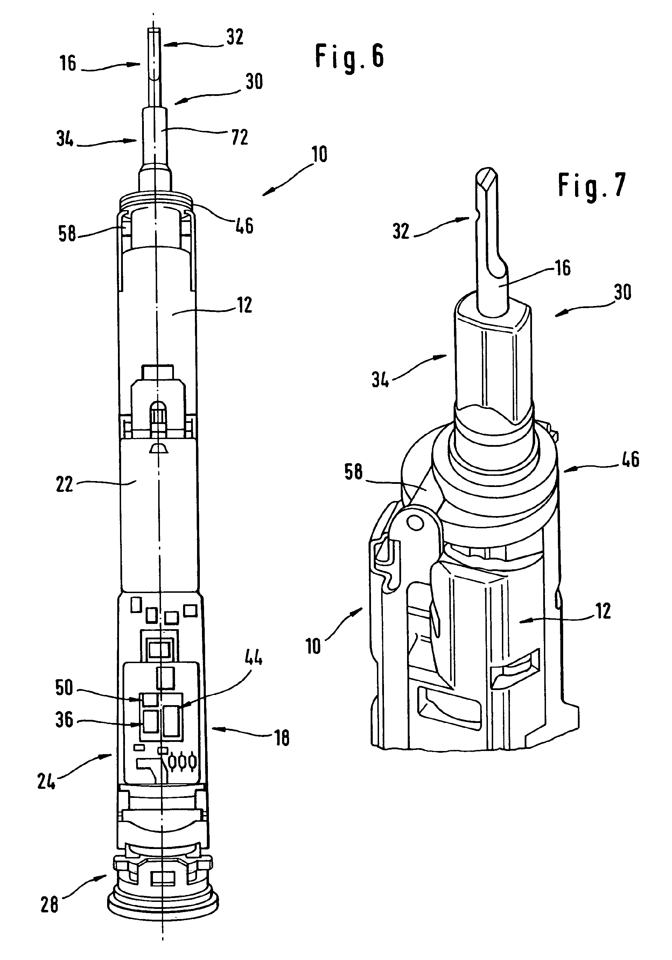

In Fig. 6 ist schematisch in perspektivischer Darstellung ein Ausführungsbeispiel eines erfindungsgemäßen Handteils 10 dargestellt. Das Handteil 10 weist die Baugruppen Getriebe 12 mit Antriebswelle 16, Steuereinrichtung 18, Elektromotor 22 bzw. Antrieb, Energieversorgung, wie Akkumulatoren 24 bzw. Batterien und Lademodul 28 auf. Das das Handteil 10 bevorzugt wasserdicht umschließende Gehäuse 26 ist bei der Darstellung der Fig. 6 abgenommen. Die mechanische Kupplung 30 zur Ankupplung der Aufsteckbürste 20 mit Bürstenkopf 14 an das Handteil 10 weist einen Kupplungsabschnitt 32 an der Antriebswelle 16 sowie einen Kupplungsabschnitt 34 am Handstück 10 auf. Die Betriebssperrvorrichtung 36, das Lesegerät 44 und eine Auswerteelektronik 50 sind in vorliegendem Ausführungsbeispiel Bestandteil der Steuereinrichtung 18, die beispielsweise als ASIC ausgebildet sein kann und einen Mikrokontroller bzw. Mikroprozessor sowie gegebenenfalls weitere elektronische Bauteile oder nur eine diskrete Schaltung aufweist. Es versteht sich, daß die elektronischen Komponenten Steuereinrichtung 18, Betriebssperrvorrichtung 36, Lesegerät 44 sowie Auswerteelektronik 50 gegebenenfalls auch durch diskrete elektronische Komponenten realisiert werden können.

Unterhalb des Kupplungsabschnitts 34 sowie oberhalb des Getriebes 12 ist eine Spule 46 positioniert, die über in Fig. 6 nicht sichtbare Anschlußleitungen mit der Steuereinrichtung 18 bzw. dem Lesegerät 44 und der Auswerteelektronik 50 verbunden ist. Im vorliegenden Ausführungsbeispiel ist diese Spule 46 im Bereich eines Schwenklagers 58 des Handteils 10 positioniert, mit dem eine spezielle zusätzliche Antriebsbewegung der Antriebswelle 16 ermöglicht ist. Bezüglich Einzelheiten der konstruktiven Ausgestaltung wird auf die auf die Anmelderin zurückgehende Patentanmeldung WO 98/01083 verwiesen.

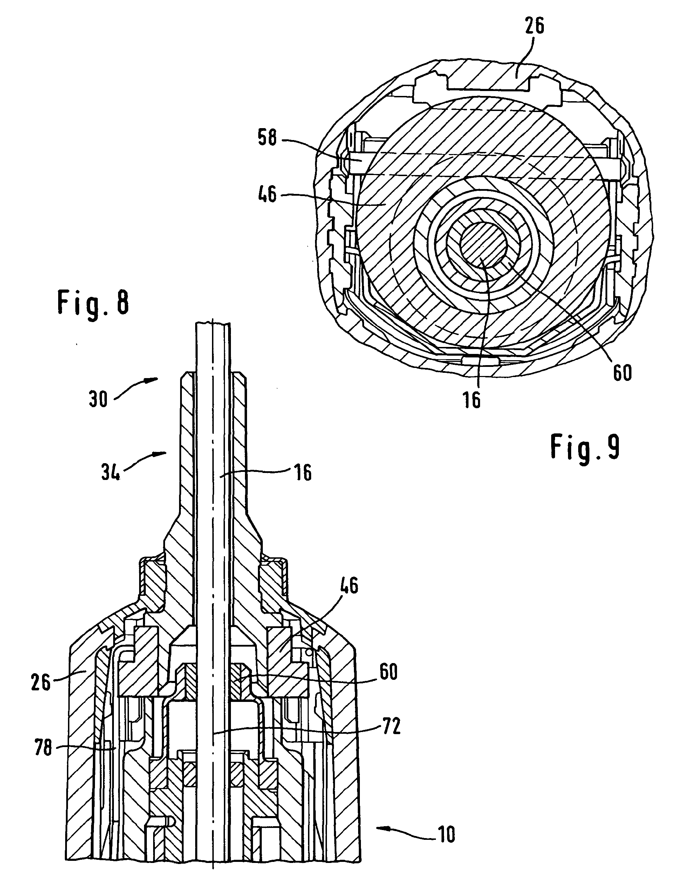

Dieser Darstellung der Fig. 6 wie auch der Fig. 7, die eine vergrößerte Darstellung des kopfseitigen Endabschnittes des Handteils 10 mit der zu Fig. 6 geometrisch unterschiedlich ausgebildeten und angeordneten Spule 46 zeigt, ist zu entnehmen, daß die Windungen der Spule 46 im wesentlichen eine Längsachse 72 des Handteils 10 bzw. die Drehachse der Antriebswelle 16 umfassen bzw. umschließen. Weiterhin ist diesen Figuren 6 und 7 wie auch den Fig. 8 und 9 zu entnehmen, daß die Wicklungsebene bzw. Windungsebene der Spule 46 im wesentlichen senkrecht zur Längsachse 72 bzw. Drehachse ausgerichtet ist. Die individuelle Ausbildung und Anordnung der Spule 46 hängt neben den erforderlichen Kopplungsfaktoren zwischen Spule 46 des Handteils 10 und Spule 48 der Aufsteckbürste 20 auch von den geometrischen Einbaubedingungen im Bereich des oberen Abschnitts des Handteils 10 ab. So versteht es sich, daß die Windungsfläche der Spule 46 beispielsweise auch einen vom rechten Winkel abweichenden Winkel bezüglich der Längsachse 72 aufweisen kann. Auch besteht die Möglichkeit, die Spule 46 an anderen, als in den Ausführungsbeispielen der Figuren 6 bis 9 dargestellten Positionen im Handteil 10 unterzubringen. Wesentlich ist, daß die Spule 46 unter Berücksichtigung der individuellen Einbaubedingungen und Geometrien einigermaßen dicht benachbart oder in der Nähe des Bereiches der mechanischen Kupplung 30 des Handteils 10 angeordnet ist. Die Anordnung ist letztendlich so zu treffen, daß bei am Handstück 10 mechanisch ordnungsgemäß angekuppelter Aufsteckbürste 20 die Kopplung der Spulen 46, 48 bzw. der Kopplungsfaktor derart eingestellt ist, daß ein Datentransfer zwischen Aufsteckbürste 20 und Handteil 10 ermöglicht ist. Hinsichtlich der Windungsfläche der Spule 46 ist anzumerken, daß diese Windungsfläche wiederum unter Berücksichtigung der Geometrie und Einbaubedingungen am Ort des Handteils 10 möglichst groß gewählt werden sollte, so daß die Kopplung mit der Freischaltfunktion bzw. dem Freischaltorgan 38 in der Aufsteckbürste optimiert bzw. ausreichend ist.

Es bleibt zu erwähnen, daß gemäß den Ausführungsbeispielen der Figuren 8 und 9 die Spule auf der bezüglich der Längs- oder Drehachse 72 axialen Höhe einer Kunststoffhülse bzw. eines Lagers 60 für die Antriebswelle 16 angeordnet ist. Dieses Lager 60 bzw. im Bereich der Windungsfläche der Spule 46 angeordnete Teile des Handteils 10, beispielsweise Antriebswelle 16 oder sonstige Gehäuseteile können als Ferrit ausgebildet sein oder Bestandteile von Ferrit besitzen, so daß auch durch diese Maßnahme eine Kopplung mit dem Freischaltorgan 38 bzw. der Freischaltfunktion des Reinigungs- und Putzwerkzeuges bzw. der Aufsteckbürste 20 verbessert werden kann.

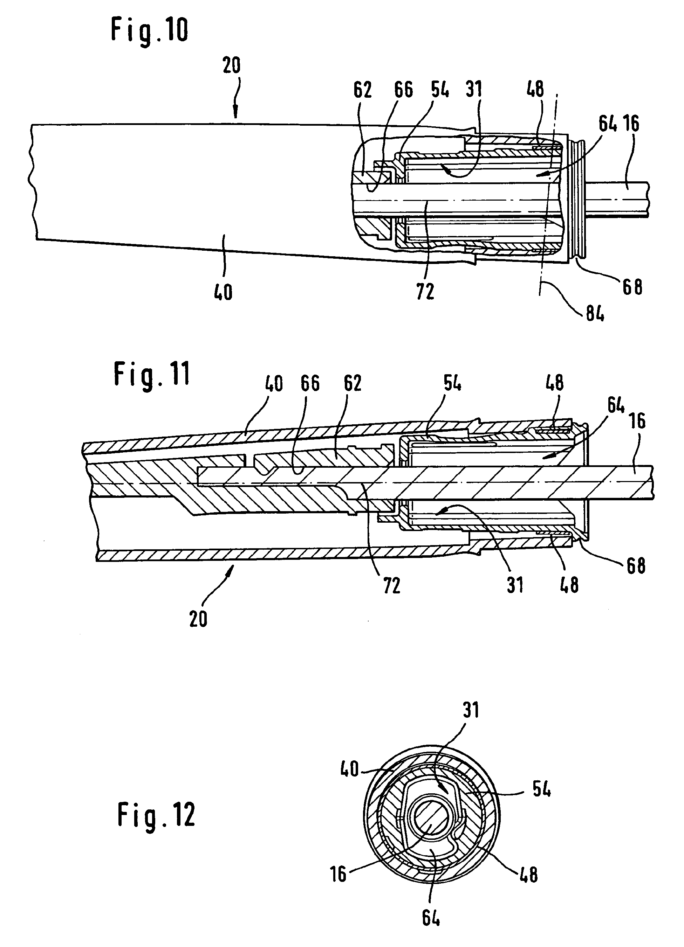

In den Figuren 10, 11 und 12 ist eine Teilansicht der Aufsteckbürste 20 wiedergegeben, die unter anderem den kupplungsseitigen Abschnitt der Aufsteckbürste 20 einer besonderen Ausführungsform darstellt. Zur Verdeutlichung der mechanischen Kopplung ist nur die Antriebswelle 16, jedoch nicht der Kupplungsabschnitt 34 des Handteils 10 mit dargestellt. Die Aufsteckbürste 20, in der der Daten- oder Informationsspeicher bzw. das Freischaltorgan 38 bzw. eine Freischaltfunktion, beispielsweise ein Transponder 42, aufgenommen ist, weist einen Schaft 40 auf, der als längliches äußeres Trägerrohr ausgebildet sein kann. Am stirnseitigen Kupplungsbereich der Aufsteckbürste 20 ist eine Ringnut 68 für den insbesondere farbigen Aufsteckring 52 vorgesehen, die Bestandteil einer im Schaft 40 aufgenommenen Hülse sein kann. In dem Schaft 40 ist in dem kupplungsseitigen Abschnitt die Hülse, ein Profilring 54 oder dergleichen positioniert, die oder der eine Durchbrechung zur Durchführung des Schaftes 16 in eine Aufnahme 66 einer Aufsteckwelle 62 besitzt. Weiterhin bildet der Profilring 54 eine Aufnahme 64 für den Kupplungsabschnitt 34 des Handteils 10. Die Aufsteckwelle 62 steht in Antriebsverbindung mit dem Bürstenkopf 14 der Aufsteckbürste und überträgt die Antriebsbewegung der Antriebswelle 16 des Handteils 10 auf den Bürstenkopf 14. Einzelheiten hierzu sind beispielsweise der 197 45 876.9 zu entnehmen, die durch ausdrücklichen Rückbezug in den Offenbarungsgehalt der vorliegenden Anmeldung mit aufgenommen wird.

Weiterhin ist aus den Figuren 10 bis 12 ersichtlich, daß auf der Außenwandung der Profilhülse 54 im Bereich des stirnseitigen Abschnitts der Aufsteckbürste 20 eine Spule 48 positioniert bzw. festgelegt ist, welche mit der Spule 46 am Handstück 10 korrespondiert. Die Windungen der Spule 48 umfassen die Längsachse 72 der Aufsteckbürste 20 bzw. die Drehachse der Aufsteckwelle 62. Die Windungsfläche der Spule 48 ist bevorzugt im wesentlichen rechtwinklig zur Längsachse 72 ausgerichtet, kann jedoch, wie mittels der strichlierten Linie 84 angedeutet, auch einen Winkel ungleich einem rechten Winkel mit der Längsachse 72 einschließen. Die spezielle Ausbildung und Anordnung der Spule 48 hängt neben dem angestrebten Kopplungsfaktor mit der Spule 46 im Handteil 10 auch von den geometrischen Gegebenheiten der Bauteile in der Aufsteckbürste 20 ab und kann insbesondere Winkellagen der Windungsfläche zwischen ca. 40° bzw. 140° bezogen auf die Längsachse 72 einschließen.

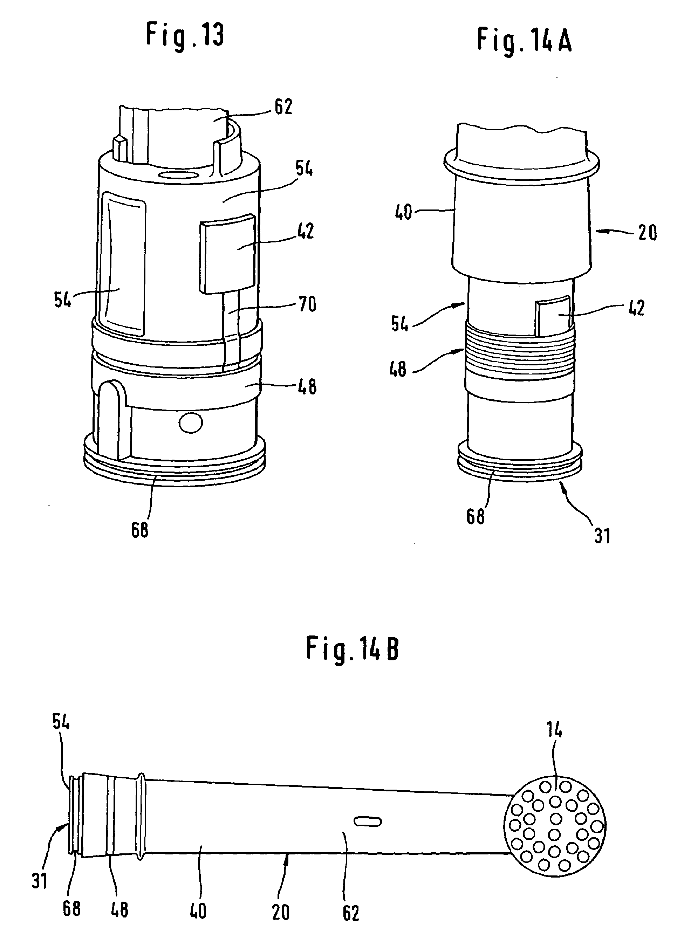

Die Anordnung der Spule 48 an den Profilring 54 bzw. einer Hülse ist den perspektivischen, schematischen Darstellungen der Figuren 13 und 14 zu entnehmen. Die Spule 48 ist bevorzugt in dem der kupplungsseitigen Stirnfläche zugewandten Bereich der Profilhülse 54 bzw. eines Profilringes angeordnet und umschließt die Außenwandung der Profilhülse 54 ringförmig. Selbstverständlich besteht auch die Möglichkeit, die Spule 48 in die aus Kunststoff bestehende Profilhülse 54 einzuspritzen oder auch die Spule 48 an der Innenwandung dieser Profilhülse 54 zu befestigen. Mit der Spule 48 ist entweder unmittelbar (Fig. 14A) oder über Anschlußleitungen 70 der Datenspeicher bzw. das Freischaltorgan 38, welches bevorzugt als Transponder 42 ausgebildet ist, gekoppelt. Auch dieser Transponder 42 ist an der Profilhülse 54 befestigt oder mit Kunststoffmaterial der Profilhülse 54 umspritzt. Dadurch, daß sämtliche für die berührungslose Detektion des Freischaltorgans bzw. den Datentransfer erforderlichen Bauteile auf oder an einem separat handhabbaren Bauteil der Aufsteckbürste 20, welches z. B. mit dem Schaft 40 verclipsbar ist, angeordnet sind, besteht die Möglichkeit, die Funktionsweise des Freischaltorgans 38 bzw. Transponders 42 oder Spule 48 bereits vor dem Zusammenbau bzw. der Endmontage der Aufsteckbürste 20 zu testen. In Fig. 14B ist eine andere Ausführungsform der Aufsteckbürste 20 bzw. der Anordnung der Spule 48 angegeben. In diesem Fall ist die Spule 48 an dem Rohr bzw. Schaft 40 der Aufsteckbürste 20 befestigt, bevorzugt an der Außenwandung. Im einzelnen ist die Spule im Bereich der Gegenkupplung bzw. in einem unteren stirnseitigen, dem Bürstenkopf 14 abgewandten Bereich auf das Rohr 40 aufgewickelt. Die Spulenanschlüsse der Spule 48 sind mit dem in Fig. 14B nicht sichtbaren Transponder verbunden.

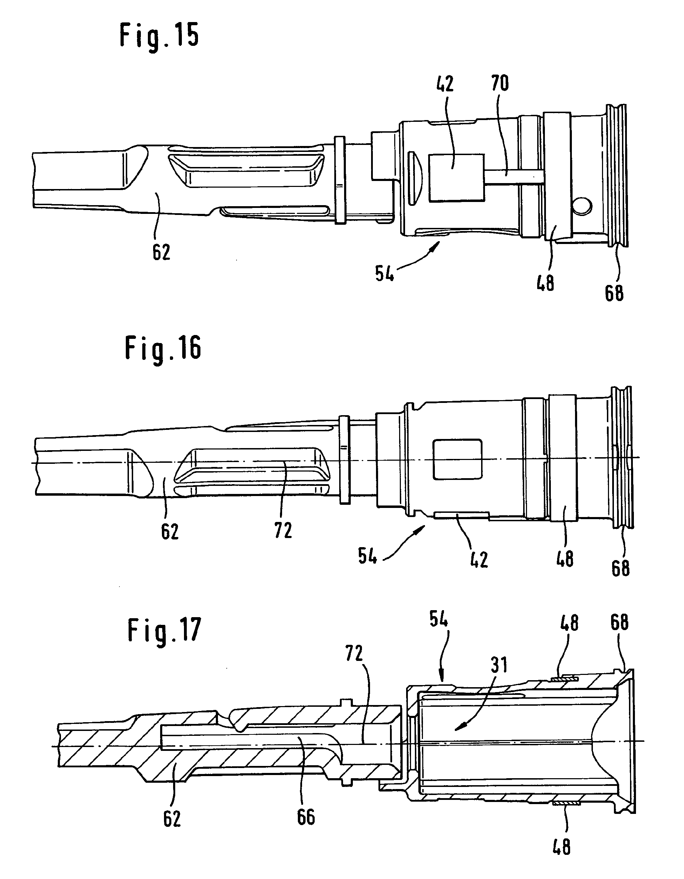

Die Figuren 15, 16 und 17 zeigen in einer anderen Darstellung die Anordnung und Positionierung der für die Freischaltfunktion erforderlichen Teile der Aufsteckbürste 20. Insoweit sind in diesen Figuren 15 bis 17 lediglich der Ring, die Hülse bzw. die Profilhülse 54 sowie ein Teil der Aufsteckwelle 62 der Aufsteckbürste 20 dargestellt. Wiederum ersichtlich ist, daß die Spule 48 die Profilhülse 54 im wesentlichen ringförmig, insbesondere kreisringförmig umfaßt und an einer Außenwandung des Profilringes 54 festgelegt ist. Ebenso sind aus Figur 15 die relative Anordnung von Transponder 42, Anschlußleitung 70 sowie Spule 48 ersichtlich.

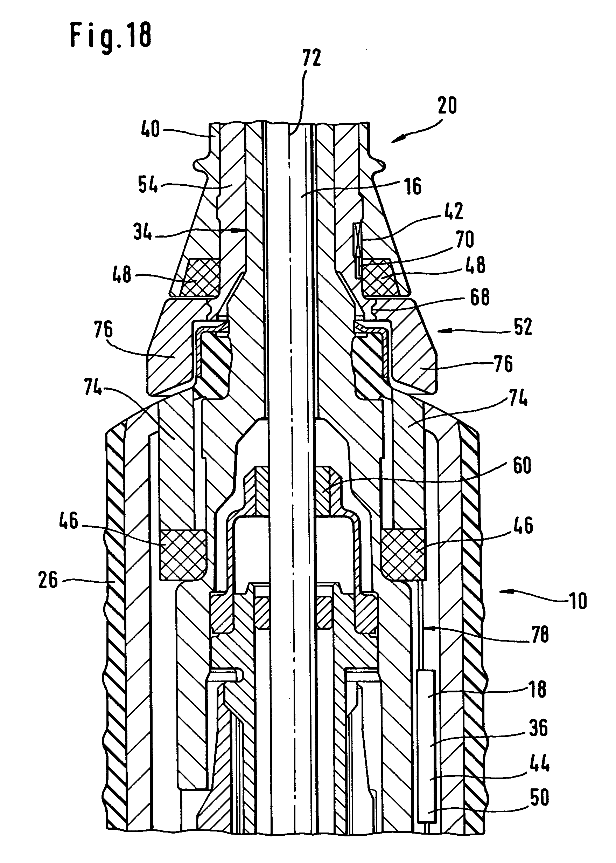

Eine Teilansicht von mechanisch gekuppeltem Handteil 10 und Aufsteckbürste 20 ist in Figur 18 dargestellt. In diesem Ausführungsbeispiel ist die Spule 48 in dem endseitigen Abschnitt des Schaftes 40 positioniert, wobei Transponder 42 und Anschlußleitungen 70 beispielsweise an der Innenwandung des rohrförmigen Schaftes 40 angeordnet sind. Die Spule 46 am Handstück 10 ist gegenüber den vorherigen Ausführungsbeispielen leicht ins Innere versetzt angeordnet und über Anschlußleitungen 78 mit der Steuereinrichtung 18 bzw. Betriebssperrvorrichtung 36 bzw. dem Lesegerät 44 oder der Auswerteelektronik 50 verbunden. Zur Verbesserung des Kopplungsfaktors zwischen Spule 46 und Spule 48 können im Handteil 10 und/oder in der Aufsteckbürste 20 Ferritkörper 74, 76 vorgesehen sein, die den Kopplungsfaktor zwischen den Spulen 46, 48 verbessern und gegebenenfalls einen größeren, baulich vorgegebenen Abstand der Spulen 46, 48 zulassen.

Auch aus dieser Darstellung geht hervor, daß die Spulen 46, 48 mit ihren Windungen die Längsachse 72 bzw. Drehachse einschließen und weiterhin bevorzugt die Windungsfläche der Spulen 46, 48 im wesentlichen rechtwinklig zur Längsachse 72 angeordnet ist.

Grundsätzlich können die Spulen 46, 48 in jeder beliebigen Positionierung am Handstück 10 bzw. an der Aufsteckbürste 20 positioniert sein, sofern gewährleistet ist, daß bei ordnungsgemäß mechanisch gekuppelter Aufsteckbürste 20 am Handstück 10 eine ausreichende Kopplung zwischen den Spulen 46, 48 vorliegt, so daß die im Handstück 10 vorgesehene Steuereinrichtung über eine elektrische und/oder magnetische, insbesondere induktive Kopplung mit dem in der Aufsteckbürste 20 vorgesehenen Freischaltorgan 38 bzw. Transponder 42 kommunizieren bzw. Daten empfangen kann.

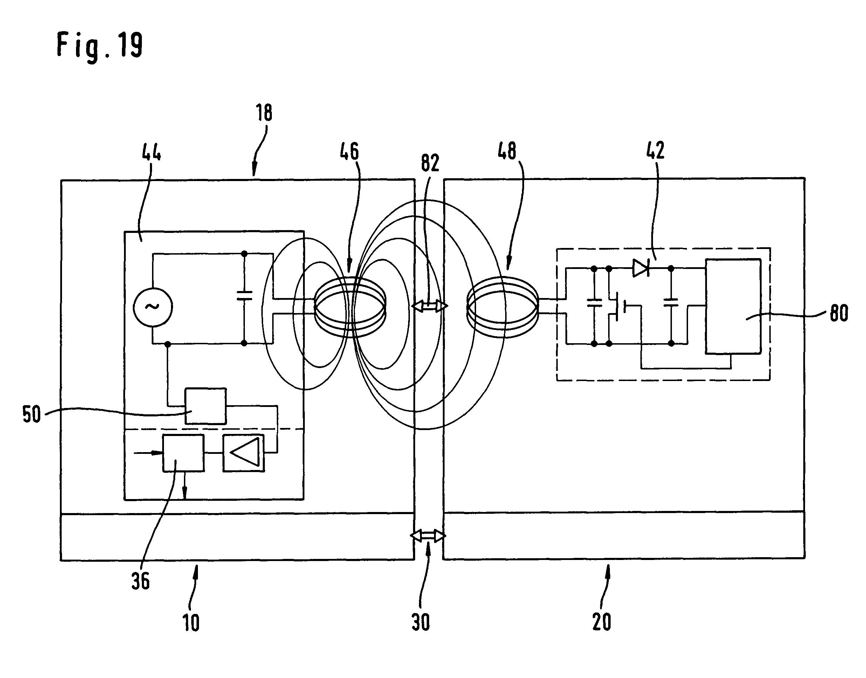

In Figur 19 sind in einem schematischen Blockschaltbild das Handteil 10 sowie die Aufsteckbürste 20 dargestellt, die miteinander einseits über eine mechanische Kupplung 30 zur Herstellung der Antriebsverbindung verbindbar sind. Andererseits stehen Aufsteckbürste 20 und Handstück 10 über eine elektrische, magnetische oder elektromagnetische, insbesondere induktive Kopplung 82 bei mechanisch an dem Handteil 10 angekoppelter Aufsteckbürste 20 in einem berührungslosen Datentransfer bzw. Kommunikationsaustausch. Der prinzipielle Aufbau einer Steuereinrichtung 18 bzw. eines Lesegerätes 44 wie auch des Freischaltorgans 38 bzw. Transponders 42 ist allgemein bekannt. Insoweit soll vorliegend auf das Lehrbuch RFID-Handbuch, Grundlagen und praktische Anwendung induktiver kontaktloser Chipkarten, Klaus Finkenzeller, 2. Auflage, November 1999, Karl Hansa Verlag München, ISBN 3-446-2278-7, insbesondere Kapitel 3, verwiesen werden, das durch ausdrücklichen Bezug in den Offenbarungsgehalt der vorliegenden Anmeldung aufgenommen wird. Im Handstück 10 ist die Steuereinrichtung 18 mit Lesegerät 44 vorgesehen, welches die Spule 46, eine Kapazität als Schwingkreis sowie einen Generator aufweist, der diesen Schwingkreis in etwa auf der Resonanzfrequenz, beispielsweise im Bereich zwischen 13 und 14 Megahertz, beispielsweise bei 13,56 Megahertz oder auch bei 125 Kilohertz ± 10 Kilohertz, betreibt. An diese Schaltungsanordnung ist die Auswerteelektronik 50 angeschlossen, deren Signale, gegebenenfalls über einen Verstärker verstärkt, der Betriebssperrvorrichtung 36 zugeführt werden. Der Betriebssperrvorrichtung 36 können gegebenenfalls weitere Signale als Eingangsgrößen zugeführt werden. Ein Ausgangssignal dieser Betriebssperrvorrichtung 36 dient jedenfalls dazu, den Antrieb des Handteils 10 der Zahnbürste freizuschalten oder zu sperren, je nach dem, ob die Anwesenheit des Freischaltorgans 38 der ordnungsgemäß mechanisch mit dem Handteil 10 gekoppelten Aufsteckbürste 20 erkannt ist bzw. ein entsprechender Datentransfer stattgefunden hat oder nicht.

In oder an dem Bürstenteil bzw. der Aufsteckbürste 20 ist die Spule 48 vorgesehen, an die eine Kapazität angeschlossen ist. Beide Bauteile bilden ebenfalls einen Schwingkreis, der auf die Sende- oder Resonanzfrequenz des Schwingkreises des Lesegerätes 44 abgestimmt ist. Weiterhin sind ein Gleichrichter, beispielsweise eine Diode sowie ein Energiespeicher, beispielsweise ein Kondensator, vorgesehen, die den vorliegend passiv betriebenen Transponder 42 mit zum Betrieb des Transponders notwendiger Energie versorgen, welche aus dem von der Spule 46 abgestrahlten hochfrequenten elektromagnetischen Feld gewonnen wird. Des weiteren kann ein µ-Controller 80 in dem Transponder 42 vorgesehen sein, der einen parallel zur Schwingkreiskapazität bzw. Spule 48 geschalteten Schalter, z. B. FET, als Lastwiderstand des Transponder-Schwingkreises - zumindest teilweise - öffnet und schließt. Die Taktfrequenz dieser Öffnungs- und Schließvorgänge kann beispielsweise im 1 KHz bis 100 kHz-Bereich, z. B. bei ca. 5 kHz, ca. 20 kHz oder bei ca. 212 kHz liegen. Aufgrund dieser Maßnahme, den Lastwiderstand im Transponder 42 mit einer weit unterhalb der Resonanzfrequenz liegenden Taktfrequenz ein- und auszuschalten (modulieren), entstehen im Lesegerät 44 Seitenbänder, um die Sende- bzw. Resonanzfrequenz des Schwingkreises des Lesegerätes 44, welche beispielsweise mit einem Bandpass leicht detektiert werden können, was zu einem verbesserten Signal/Rausch-Abstand führt. Auch kann bevorzugt bei niedrigen Taktfrequenzen im Bereich zwischen 1 kHz und 50 kHz ein Hüllkurvendemodulator oder dergleichen zur Demodulation eingesetzt werden. Auch können mit dieser Taktfrequenz eine Vielzahl von Daten von dem Transponder 42 an das Lesegerät 44 übertragen werden, wobei die Daten durch die Takt- oder Impulsfolge, das Tastverhältnis bzw. die Impulsfolgefrequenz bestimmt sind. Letztendlich handelt es sich bei diesen Maßnahmen um eine Lastmodulation mittels eines Hilfsträgers (subcarrier) am Transponder 42, wodurch die Rückwirkung des Transponders 42 auf das Lesegerät 44 mittels bekannter Demodulationsverfahren (z. B. amplitude shift keying (ASK) mit und ohne Seitenband) leicht und einfach detektiert werden können. Für weitere Einzelheiten sei auf das vorerwähnte RFID-Handbuch verwiesen. Ferner, sofern auf eine Lastmodulation des Transponder-Schwingkreises verzichtet, und die Phase (phase shift keying) oder Frequenz (frequency shift keying) moduliert wird, ist der Reader entsprechend anzupassen.

Im folgenden sollen beispielhafte Daten zur Realisierung vorteilhafter Ausführungsformen des Transfersystems zwischen Aufsteckbürste 20 und Handteil 10 angegeben werden. Es hat sich im Bezug auf die Realisierung praktikabler Kopplungsfaktoren zwischen Datenspeicher im Bürstenteil und Datenleser im Handstück als vorteilhaft erwiesen, die an den Datenspeicher bzw. Datenleser angeschlossenen Spulen 46, 48 zum drahtlosen Datentransfer bezüglich der geometrischen Positionierung etwa im unteren kupplungsseitigen Drittel des Schaftes 40 der Aufsteckbürste 20 sowie im oberen, kupplungsseitigen Viertel des Gehäuses 26 des Handteils 10 anzuordnen. Je näher die beiden Spulen 46, 48 im ordnungsgemäß gekuppelten Zustand des Handteils und Bürstenteils relativ zueinander angeordnet sind, um so leichter sind die erforderlichen Kopplungsfaktoren realisierbar. Die Kopplungsfaktoren werden auch durch die Projektion der miteinander zur Deckung gelangenden Windungsflächen der beiden Spulen 46, 48 bestimmt. Insoweit bietet es sich an, daß die Neigung der Windungsflächen der Spulen zur Längsachse 72 bzw. Drehachse von Bürstenteil und Handteil nicht mehr als ca. 50° von der gemeinsamen, optimalen rechtwinkligen Positionierung abweicht. Die Windungen der Spulen 46, 48 umschließen oder umfassen bevorzugt die Längsachse 72 bzw. Drehachse von Handteil sowie Bürstenteil, wodurch zum einen eine ausreichende Kopplung zwischen den Spulen 46, 48 erzielt und zum anderen auch eine geometrisch praktikabler Einbauort im Bürstenteil und/oder Handteil gewählt werden kann. Die Spulen selbst können herkömmliche drahtgewickelte Spulen sein, wobei sich für die Spule 46 beispielhafte Daten von ca. 10 ± 3 Windungen, bei einem Windungsdurchmesser von ca. 15 mm ± 3 mm, eine Drahtdicke von ca. 0,1 mm ergeben. Die Induktivität kann im Bereich von ca. 2 µH liegen und der Ohmsche Widerstand im Bereich von 1 Ohm. Für die Spule 48 können Windungszahlen von 15 ± 4 bei einem Windungsdurchmesser von 9 mm ± 2 mm und einer Drahtdicke von z. B. 0,06 mm vorgesehen sein. Die Induktivität liegt dann im Bereich von ca. 2 µH bis ca. 8 µH, bevorzugt ca. 5 µH bei einem Ohmschen Widerstand der Spule von ca. 1 Ohm bis ca. 10 Ohm, bevorzugt ca. 4 Ohm. Es versteht sich, daß die Spulen 46, 48 als herkömmliche drahtgewickelte Spulen ausgebildet sein können oder auch in Form von gedruckten, beispielsweise auf einer flexiblen Kunststofffolie oder dem Transponderchip selbst angeordneten Windungen zum Einsatz gelangen können. Die Kopplung der beiden Spulen 46, 48 bei ordnungsgemäß mechanisch gekuppeltem Handteil und Bürstenteil kann im Bereich zwischen 1 % und 8 %, bevorzugt bei ca. 5 % liegen, wobei im vorliegenden Ausführungsbeispiel und den vorliegend verwendeten Frequenzen im zweistelligen MHz-Bereich vorwiegend eine induktive Kopplung der Spulen 46, 48 vorliegt. Der Durchmesser der Spulen sollte einen Wert von ca. 3 mm nicht unterschreiten. Die vorgenannten beispielhaften Angaben zur Dimensionierung und geometrischen Ausbildung der Spulen beziehen sich nicht auf den Einsatz von Ferritkörpern 74, 76 gemäß Fig. 18. Unter Berücksichtigung derartiger Ferritkörper 74, 76 zur Verbesserung der Kopplung der Spulen 46, 48 können diese Daten entsprechend modifiziert werden. Die Güte des Transponder-Schwingkreises sollte im Bereich zwischen Q≅ 5-15, bevorzugt Q ≅8-10 liegen, um die Abhängigkeit von toleranzbedingten Schwankungen der Resonanzfrequenz gering zu halten, insbesondere in bezug auf die Phasenverschiebung. Die Güte wird u.a. mittels der Drahtstärke der Spule 48 eingestellt.

Der Daten- bzw. Informationsspeicher des Bürstenteils, insbesondere Transponder 42, sowie der Daten- oder Informationsleser 44 im Handstück der elektrischen Zahnbürste sind als handelsübliche Bauteile in einer Vielzahl unterschiedlicher Spezifikationen handelsüblich erhältlich. Bezüglich Details wird wiederum auf das vorerwähnte RFID-Handbuch verwiesen. Selbstverständlich besteht auch die Möglichkeit, beispielsweise den Datenleser 44 in einem im Handteil der Zahnbürste vorhandenen anwenderspezifischen integrierten Schaltkreis (ASIC) einzubeziehen.

### Bezugszeichenliste

- 10: Handteil
- 12: Getriebe
- 14: Bürstenkopf
- 16: Antriebswelle
- 18: Steuereinrichtung, -funktion (mit µ-Prozessor etc.)
- 20: Aufsteckbürste, Bürstenteil
- 22: Elektromotor, Antrieb
- 24: Akku
- 26: Gehäuse
- 28: Lademodul
- 30: Kupplung
- 31: Gegenkupplung
- 32: Kupplungsabschnitt
- 34: Kupplungsabschnitt
- 36: Betriebssperrvorrichtung, -funktion (Teil von 18)
- 38: Freischaltorgan, -funktion
- 40: Schaft, Rohr
- 42: Transponder
- 44: Lesegerät, -funktion (Teil von 18)
- 46: Spule (Handstück)
- 48: Spule (Aufsteckbürste)
- 50: Auswerteelektronik, -funktion (Teil von 18)
- 52: Aufsteckring
- 54: Profilhülse, Hülse
- 56: Einschalter, Einschaltfunktion
- 58: Schwenklager, Schwenkachse
- 60: Lager
- 62: Aufsteckwelle
- 64: Aufnahme (für 34)
- 66: Aufnahme (für 32)
- 68: Ringnut (für 52)
- 70: Anschlußleitung
- 72: Längsachse, Drehachse
- 74: Ferritkörper
- 76: Ferritkörper
- 78: Anschlußleitung
- 80: µC
- 82: induktive Kopplung
- 84: Linie

## Patentansprüche

1. Bürstenkopfteil einer Zahnbürste, wobei die Zahnbürste ein Handteil (10) aufweist, an das das Bürstenkopfteil angefügt werden kann, mit einer ein Borstenteil umfassenden Bürstenkopfanordnung, die vom Handteil (10) der Zahnbürste abnehmbar ist, **gekennzeichnet durch** Kommunikationsmittel zur Datenkommunikation zwischen der Bürstenkopfanordnung und dem Handteil (10), und mit einem Speicherelement in der Bürstenkopfanordnung zum Speichern von Daten, wobei die Daten in das Speicherelement eingeschrieben werden.

2. Bürstenkopf nach Anspruch 1, **dadurch gekennzeichnet, daß** die Kommunikationsmittel Mittel zur Datenkommunikation mit dem Handteil (10) umfassen, wenn das Bürstenkopfteil und der Handgriff (10) zusammengefügt werden.

3. Bürstenkopf nach Anspruch 1 oder 2, **dadurch gekennzeichnet, daß** die Informationen Betriebsinformationen zur sachgemäßen Verwendung der Zahnbürste bezüglich der Bürstenkopfanordnung betreffen.

4. Bürstenkopf nach einem der vorhergehenden Ansprüche, **dadurch gekennzeichnet, daß** die Kommunikationsmittel elektrisch leitende Elemente umfassen.

5. Bürstenkopf nach einem der vorhergehenden Ansprüche, **dadurch gekennzeichnet, daß** die Kommunikationsmittel drahtlose Komponenten umfassen.

6. Bürstenkopf nach Anspruch 5, **dadurch gekennzeichnet, daß** die drahtlosen Komponenten Spulen zur induktiven Kommunikation umfassen.

7. Zahnbürste mit einem Bürstenkopfteil, das in Nähe seines einen Endes ein Borstenteil aufweist, ferner mit einem Handteil (10) mit einer darin angeordneten Antriebseinheit zum Antrieb des Borstenteils, wobei das Bürstenkopfteil und das Handteil (10) so angepaßt sind, daß das Bürstenkopfteil vom Handteil (10) abnehmbar ist, **gekennzeichnet, durch** Kommunikationsmittel zur Datenkommunikation zwischen dem Bürstenkopfteil und dem Handteil (10), wenn das Bürstenkopfteil und das Handteil (10) zusammengefügt werden, einem Speicherelement im Bürstenkopfteil zum Speichern zumindest von Daten, die das Bürstenkopfteil identifizieren und mit einem Mikrokontroller im Handteil (10), wobei das Speicherelement im Bürstenkopfteil darin enthaltene Informationen an den Mikrokontroller über Kommunikationsmittel weitergibt.

8. Zahnbürste nach Anspruch 7, **dadurch gekennzeichnet, daß** der Mikrokontroller Mittel umfaßt, um die tatsächliche Benutzung des Bürstenkopfes mit einer bestimmten Maximalputzzeitdauer zu vergleichen und um einen Hinweis zu geben, wenn die bestimmte Maximalputzzeitdauer erreicht worden ist, um anzuzeigen, daß der Bürstenkopf ausgetauscht werden sollte.
